(19) Europäisches Patentamt
European Patent Office
Office européen des brevets

(11) **EP 4 509 908 A1**

(12) **EUROPEAN PATENT APPLICATION**
published in accordance with Art. 153(4) EPC

(43) Date of publication:
**19.02.2025 Bulletin 2025/08**

(21) Application number: 23788333.5

(22) Date of filing: **11.04.2023**

(51) International Patent Classification (IPC):
*G02F 1/13* (2006.01)    *G02F 1/1334* (2006.01)
*G02F 1/1347* (2006.01)    *G02F 1/137* (2006.01)

(52) Cooperative Patent Classification (CPC):
G02F 1/13; G02F 1/1334; G02F 1/1347;
G02F 1/137

(86) International application number:
**PCT/JP2023/014699**

(87) International publication number:
**WO 2023/199915 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 11.04.2022 JP 2022065199
11.04.2022 JP 2022065200
11.04.2022 JP 2022065201

(71) Applicant: **Toppan Holdings Inc.**
**Tokyo 110-0016 (JP)**

(72) Inventors:
• **SAKAMOTO, Katsuhito**
**Tokyo 110-0016 (JP)**
• **YOSHIDA, Tetsushi**
**Tokyo 110-0016 (JP)**
• **MICHI, Hiroyuki**
**Tokyo 110-0016 (JP)**

(74) Representative: **TBK**
**Bavariaring 4-6**
**80336 München (DE)**

(54) **LIGHT CONTROL DEVICE**

(57) A light control device (10) of the present invention includes two light control units (11UN1, 11UN2) each having a light control sheet reversibly changeable between a transparent state and an opaque state, one light control sheet overlapping another light control sheet, the light control device being configured to have a state in which the light control sheets are simultaneously opaque, the light control sheet including: a transparent polymer layer having voids; and a liquid crystal composition containing a liquid crystal compound and a dichroic dye, the voids being filled with the liquid crystal composition, wherein an absorbance difference, which is a value obtained by subtracting an average absorbance of the liquid crystal composition from an absorbance of the light control sheets in the opaque state, is 0.4 or greater. With this configuration, the light control device (10) of the present invention can improve the contrast.

FIG.2

## Description

[Technical Field]

The present disclosure relates to light control devices reversibly changeable between a transparent state and an opaque state.

[Background Art]

A normal type light control sheet includes a light control layer containing a liquid crystal compound. When a drive signal is input to a light control sheet, an electric field is formed in the light control layer so that the major axis direction of the liquid crystal compound is aligned. Accordingly, the normal type light control sheet reversibly changes from transparent in an energized state to opaque in a de-energized state.

A reverse type light control sheet includes a light control layer containing a liquid crystal compound, and an alignment layer that applies an alignment control force to the liquid crystal compound. An example of alignment control force controls the orientation of the liquid crystal compound so that the major axis direction of the liquid crystal compound is substantially perpendicular to the plane direction of the alignment layer when the light control sheet is not energized. When a drive signal is input to a light control sheet, an electric field that resists the alignment control force is formed so that the major axis direction of the liquid crystal compound is substantially parallel to the plane direction of the alignment layer. Accordingly, the reverse type light control sheet reversibly changes from transparent in a de-energized state to opaque in an energized state (see e.g., PTL 1).

[Citation List]

[Patent Literature]

PTL 1: JP 2019-194654 A

[Summary of Invention]

[Technical Problem]

Alight control sheet including a transparent polymer layer and particles of a liquid crystal composition dispersed in the transparent polymer layer becomes opaque due to scattering caused by a refractive index difference between the transparent polymer layer and the particles. Adding a dichroic dye to the particles makes the light control sheet colored and opaque when not energized, while making it colorless and transparent when energized.

On the other hand, an excessive increase in the formulation ratio of the dichroic dye increases the chromaticity in the opaque state of the light control sheet, but reduces the dispersion due to the refractive index difference, resulting in a reduction in the responsiveness of the liquid crystal compound. As a result, it is required for the light control device containing a dichroic dye in the liquid crystal composition, whether normal type or reverse type, to improve the contrast of the light control device, that is, to increase the difference in light transmittance between transparent and opaque.

[Solution to Problems]

A light control device for solving the above problems includes two light control sheets that are reversibly changeable between a transparent state and an opaque state, one of the light control sheets overlapping the other of the light control sheets, the light control device being configured to have a state in which the light control sheets are simultaneously opaque, the light control sheet including: a transparent polymer layer having voids; and a liquid crystal composition containing a liquid crystal compound and a dichroic dye, the voids being filled with the liquid crystal composition, wherein an absorbance difference, which is a value obtained by subtracting an average absorbance of the liquid crystal composition from an absorbance of the light control sheets in the opaque state, is 0.4 or greater, the average absorbance is an average value of the absorbance of the liquid crystal composition when horizontally aligned and the absorbance of the liquid crystal composition when vertically aligned, the absorbance of the liquid crystal composition when horizontally aligned is an absorbance obtained by placing a liquid crystal composition containing the liquid crystal compound and the dichroic dye in a cell for horizontal alignment having a thickness of 6 $\mu$m, and the absorbance of the liquid crystal composition when vertically aligned is an absorbance obtained by placing a liquid crystal composition containing the liquid crystal compound and the dichroic dye in a cell for vertical alignment having a thickness of 6 $\mu$m.

A light control device for solving the above problems includes two light control sheets that are reversibly changeable between a transparent state and an opaque state, one of the light control sheets overlapping the other of the light control sheets, the light control device being configured to have a state in which the light control sheets are simultaneously opaque, the light control sheet including: a transparent polymer layer having voids; and a liquid crystal composition containing a liquid crystal compound and a dichroic dye, the voids being filled with the liquid crystal composition, wherein an absorbance difference, which is a value obtained by subtracting a horizontal absorbance of the liquid crystal composition from an absorbance of the light control sheets in the opaque state, is 0.1 or greater, the horizontal absorbance is an absorbance of the liquid crystal composition when horizontally aligned, and the absorbance of the liquid crystal composition when horizontally aligned is an absorbance obtained by placing a liquid crystal composition containing the liquid crystal compound and the dichroic dye in a cell for horizontal alignment having a thickness of 6 μm.

A light control device for solving the above problems includes a light control sheet that is reversibly changeable between a transparent state and an opaque state, the light control sheet including: a liquid crystal composition containing a liquid crystal compound and a dichroic dye; and a transparent polymer layer having voids, the voids being filled with the liquid crystal composition, the light control sheet being configured to reversibly change from transparent to opaque in response to a change in alignment of the liquid crystal compound, wherein an absorbance difference, which is a value obtained by subtracting an average absorbance of the liquid crystal composition from an absorbance of the light control device in the opaque state, is 0.8 or greater, the average absorbance is an average value of the absorbance of the liquid crystal composition when horizontally aligned and the absorbance of the liquid crystal composition when vertically aligned, the absorbance of the liquid crystal composition when horizontally aligned is an absorbance obtained by placing a liquid crystal composition containing the liquid crystal compound and the dichroic dye in a cell for horizontal alignment having a thickness of 6 μm, and the absorbance of the liquid crystal composition when vertically aligned is an absorbance obtained by placing a liquid crystal composition containing the liquid crystal compound and the dichroic dye in a cell for vertical alignment having a thickness of 6 μm.

[Advantageous Effects of Invention]

The light control device of the present disclosure can improve contrast.

[Brief Description of Drawings]

Fig. 1 is a cross-sectional view illustrating a layer structure of a light control device of a first example.

Fig. 2 is a cross-sectional view illustrating a layer structure of a light control device of a second example.

Fig. 3 is a cross-sectional view illustrating a layer structure of a light control sheet.

Fig. 4 is a cross-sectional view illustrating a layer structure of a light control sheet.

Fig. 5 is a table showing optical properties of a light control sheet of a Test Example.

Fig. 6 is a table showing optical properties of a light control sheet of a Test Example.

Fig. 7 is a graph showing a relationship between parallel light transmittance and contrast.

Fig. 8 is a graph showing a relationship between total light transmittance and contrast.

Fig. 9 is a graph showing a relationship between diffuse transmittance and contrast.

Fig. 10 is a graph showing a relationship between haze and contrast.

Fig. 11 is a graph showing a relationship between clarity and contrast.

Fig. 12 is a graph showing a relationship between haze, clarity and contrast.

Fig. 13 is a graph showing a relationship between various hazes and contrast.

Fig. 14 is a graph showing a relationship between various absorbance differences and contrast.

Fig. 15 is a graph showing a relationship between absorbance difference and contrast.

Fig. 16 is a graph showing a relationship between various transmittances and contrast.

[Description of Embodiments]

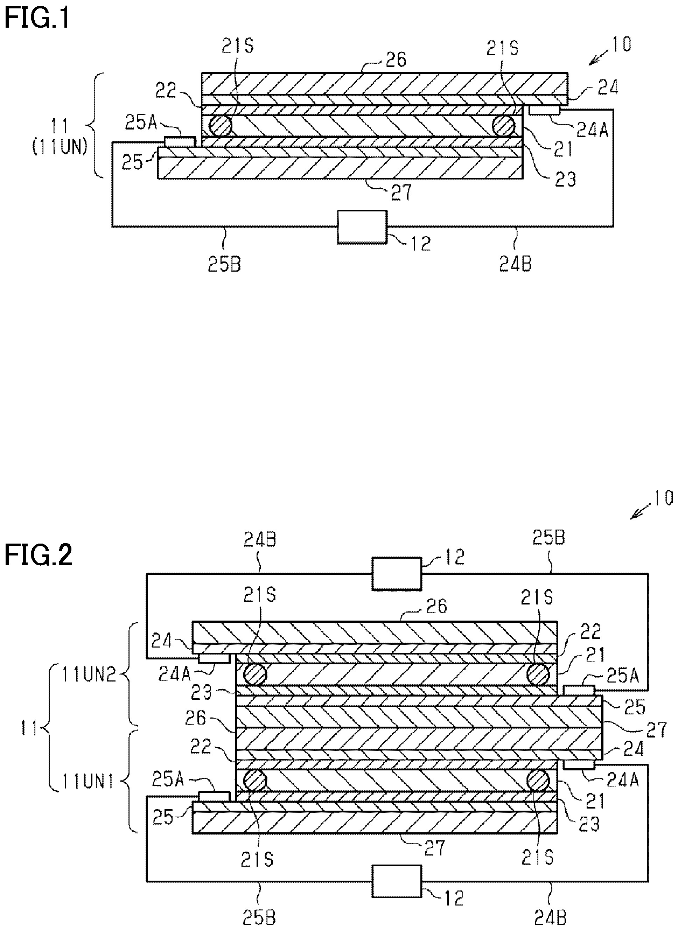

With reference to Figs. 1 to 16, an embodiment of a light control device will be described.

A light control sheet constituting a light control device 10 may be mounted to windows of moving objects such as vehicles and aircraft. A light control sheet may be mounted to windows of various buildings such as houses, stations and airports, partitions installed in offices, display windows provided in stores, or screens for projecting images. The shape of the light control sheet may be flat or curved.

The light control sheet reversibly changes from transparent to opaque. The type of the light control sheet may be a normal type that changes from opaque to transparent in response to an input of a drive signal, or a reverse type that changes from transparent to opaque in response to an input of a drive signal. The light control device 10 includes one or more light control sheets. The light control sheet included in the light control device 10 may be a single layer body composed of a single light control sheet, or a laminate in which one light control sheet overlaps another light control sheet.

The following will mainly describe an example of the light control device 10 that includes a reverse type light control sheet.

[First Example Light Control Device 10]

As shown in Fig. 1, a light control device 10 of a first example includes a single light control unit 11 and a single driving unit 12. The light control unit 11 includes a single reverse type light control sheet. The single light control sheet includes a light control layer 21, a first alignment layer 22, a second alignment layer 23, a first transparent electrode layer 24 and a second transparent electrode layer 25. The first alignment layer 22 and the second alignment layer 23 sandwich the light control layer 21 in the thickness direction of the light control layer 21. The light control layer 21 is located between the first alignment layer 22 and the second alignment layer 23. The light control layer 21 is in contact with the first alignment layer 22 and the second alignment layer 23. The first transparent electrode layer 24 and the second transparent electrode layer 25 sandwich a pair of alignment layers 22 and 23 in the thickness direction of the light control layer 21. The light control sheet 21 is located between the first transparent electrode layer 24 and the second transparent electrode layer 25. The first transparent electrode layer 24 is in contact with the first alignment layer 22. The second transparent electrode layer 25 is in contact with the second alignment layer 23. The light control sheet includes a first transparent substrate 26 that supports the first transparent electrode layer 24 and a second transparent substrate 27 that supports the second transparent electrode layer 25.

The light control device 10 includes a first electrode 24A attached to a portion of the first transparent electrode layer 24 and a second electrode 25A attached to a portion of the second transparent electrode layer 25. The light control device 10 includes a first wiring 24B connected to the first electrode 24A and a second wiring 25B connected to the second electrode 25A. The first electrode 24A is connected to the driving unit 12 via the first wiring 24B. The second electrode 25A is connected to the driving unit 12 via the second wiring 25B.

The light control device 10 includes a single light control unit 11UN. The light control unit 11UN is a repeating unit in the thickness direction of the light control sheet. The light control device 10 of the example shown in Fig. 1 includes a single light control unit 11UN. The light control unit 11UN includes the light control layer 21, the first alignment layer 22, the second alignment layer 23, the first transparent electrode layer 24 and the second transparent electrode layer 25. The single light control unit 11UN includes a single light control sheet, the first electrode 24A, the first wiring 24B, the second electrode 25A and the second wiring 25B. The light control unit 11UN may further include other functional layers such as a hard coat layer, an ultraviolet absorbing layer and an infrared absorbing layer.

[Second Example Light Control Device 10]

As shown in Fig. 2, a light control device 10 of a second example includes a single light control unit 11 and two driving units 12. The light control unit 11 includes two reverse type light control sheets. Each light control sheet includes a light control layer 21, a first alignment layer 22, a second alignment layer 23, a first transparent electrode layer 24 and a second transparent electrode layer 25. The first alignment layer 22 and the second alignment layer 23 sandwich the light control layer 21 in the thickness direction of the light control layer 21. The light control layer 21 is located between the first alignment layer 22 and the second alignment layer 23. The light control layer 21 is in contact with the first alignment layer 22 and the second alignment layer 23. The first transparent electrode layer 24 and the second transparent electrode layer 25 sandwich a pair of alignment layers 22 and 23 in the thickness direction of the light control layer 21. The light control layer 21 is located between the transparent electrode layers 24 and 25. The first transparent electrode layer 24 is in contact with the first alignment layer 22. The second transparent electrode layer 25 is in contact with the second alignment layer 23. The light control sheet includes a first transparent substrate 26 that supports the first transparent electrode layer 24. The light control sheet includes a second transparent substrate 27 that supports the second transparent electrode layer 25.

The light control device 10 includes a first electrode 24A attached to a portion of the first transparent electrode layer 24 and a second electrode 25A attached to a portion of the second transparent electrode layer 25. The light control device 10 includes a first wiring 24B connected to the first electrode 24A and a second wiring 25B connected to the second electrode 25A. The first electrode 24A is connected to the driving unit 12 via the first wiring 24B. The second electrode 25A is connected to the driving unit 12 via the second wiring 25B.

The light control device 10 includes two light control units 11UN. The two light control units 11UN are composed of a first light control unit 11UN1 and a second light control unit 11UN2.

The first light control unit 11UN1 has the same structure as that of the second light control unit 11UN2. The second transparent substrate 27 of the second light control unit 11UN2 overlaps the first transparent substrate 26 of the first light control unit 11UN1. The second transparent substrate 27 of the second light control unit 11UN2 is bonded to the first transparent substrate 26 of the first light control unit 11UN1 via an optical clear adhesive. The light control device 10 composed of a plurality of light control units 11UN increases the optical path length of light entering the light control device 10 compared to the light control device 10 composed of a single light control unit 11UN.

One driving unit 12 inputs a drive signal to the first light control unit 11UN1. The other driving unit 12 inputs a drive signal to the second light control unit 11UN2. The two driving units 12 make the first light control unit 11UN1 and the second light control unit 11UN2 simultaneously opaque. The two driving units 12 make the first light control unit 11UN1 and the second light control unit 11UN2 simultaneously transparent.

The two driving units 12 may make the first light control unit 11UN1 and the second light control unit 11UN2 separately opaque. The two driving units 12 may make the first light control unit 11UN1 and the second light control unit 11UN2 separately transparent.

The light control device 10 of the second example may include a single driving unit 12. The single driving unit 12 inputs a drive signal to the first light control unit 11UN1 and inputs a drive signal to the second light control unit 11UN2. The single driving unit 12 makes the first light control unit 11UN1 and the second light control unit 11UN2 simultaneously opaque. The single driving unit 12 makes the first light control unit 11UN1 and the second light control unit 11UN2 simultaneously transparent.

The single driving unit 12 may make the first light control unit 11UN1 and the second light control unit 11UN2 separately opaque. The single driving unit 12 may make the first light control unit 11UN1 and the second light control unit 11UN2 separately transparent.

[Light Control Sheet]

The light control sheet included in the light control device 10 of the first and second examples will be described below.

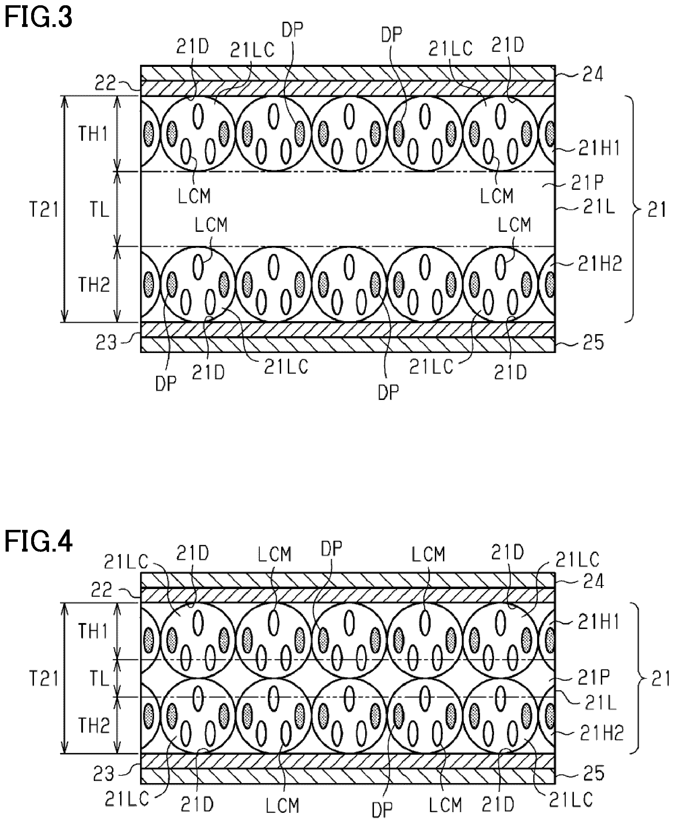

As shown in Fig. 3, the light control layer 21 includes a transparent polymer layer 21P and a liquid crystal composition 21LC. The transparent polymer layer 21P has optical transparency to visible light. The transparent polymer layer 21P includes a number of voids 21D. The transparent polymer layer 21P is a cured product of a polymerizable composition. The transparent polymer layer 21P may be a cured product of a photocurable compound or a cured product of a thermosetting compound. The liquid crystal composition 21LC fills the inside of the voids 21D.

The photocurable compound constituting the transparent polymer layer 21P may be at least one selected from the group consisting of acrylate compounds, methacrylate compounds, styrene compounds, thiol compounds, oligomers of these compounds, and polymers of these compounds. The acrylate compound may be at least one selected from the group consisting of monoacrylate compounds, diacrylate compounds, triacrylate compounds and tetraacrylate compounds. The acrylate compound may be at least one selected from the group consisting of butyl ethyl acrylate, ethyl hexyl acrylate and cyclohexyl acrylate. The methacrylate compound may be at least one selected from the group consisting of dimethacrylate compounds, trimethacrylate compounds and tetramethacrylate compounds. The methacrylate compound may be at least one selected from the group consisting of N,N-dimethylaminoethyl methacrylate, phenoxyethyl methacrylate, methoxyethyl methacrylate and tetrahydrofurfuryl methacrylate. The thiol compound may be 1,3-propanedithiol or 1,6-hexanedithiol. The styrene compound may be styrene or methyl styrene.

The liquid crystal composition 21LC contains a liquid crystal compound LCM and a dichroic dye DP. The liquid crystal composition 21LC may contain, in addition to the liquid crystal compound LCM and the dichroic dye DP, a polymerizable composition for forming the transparent polymer layer 21P, a plasticizer for reducing the viscosity of the liquid crystal composition 21LC, and the like. The ratio of the mass of the liquid crystal composition 21LC relative to the total mass of the light control layer 21 may be 30 mass% or greater and 70 mass% or less, and preferably 40 mass% or greater and 60 mass% or less. The liquid crystal composition 21LC may further contain a reactive mesogenic compound. When the liquid crystal compound LCM is vertically aligned, the reactive mesogenic compound is also vertically aligned. Networking of the vertically aligned reactive mesogenic compound promotes vertical alignment of the liquid crystal compound LCM. That is, the alignment control force of the networked reactive mesogenic compound promotes vertical alignment of the liquid crystal compound LCM.

The light control layer 21 is a polymer dispersion type. The polymer dispersion type light control layer 21 includes the transparent polymer layer 21P that defines a number of voids 21D. The liquid crystal composition 21LC is held in the voids 21D dispersed in the transparent polymer layer 21P. The polymer dispersion type light control layer 21 may be a polymer network type light control layer 21 or may be a capsule type light control layer 21. A polymer network type light control layer 21 includes a three-dimensional mesh-shaped transparent polymer layer 21P, and holds a liquid crystal composition 21LC inside interconnected mesh-like voids 21D. A capsule type light control layer 21 holds a liquid crystal composition 21LC inside capsule-like voids 21D dispersed in a transparent polymer layer 21P.

The liquid crystal compound LCM may be at least one selected from the group consisting of Schiff base-based, azo-based, azoxy-based, biphenyl-based, terphenyl-based, benzoic acid ester-based, tolan-based, pyrimidine-based, cyclohexane carboxylic acid ester-based, phenylcyclohexane-based and dioxane-based compounds.

The NI point of the liquid crystal compound LCM is the temperature at which the liquid crystal compound LCM transitions from the nematic phase (N phase) to the isotropic liquid phase (I phase). The NI point of the liquid crystal compound LCM indicates the degree to which the anisotropy of the liquid crystal compound LCM disappears at an ambient temperature. The NI point of the liquid crystal compound LCM significantly reflects the degree of intermolecular interactions in the liquid crystal compound LCM. When the liquid crystal compound LCM is a combination of two or more compounds, the NI point of the liquid crystal compound LCM is the weighted average value of the NI points of the respective compounds weighted by the formulation ratio of each compound. It is possible to increase or decrease the NI point of the liquid crystal compound LCM by the composition of two or more liquid crystal compounds LCM with mutually different NI points. When it is required to enhance the alignment order of the liquid crystal compound LCM at high ambient temperatures, such as 100°C, the NI point is preferably 100°C or higher. When it is required to improve homogenization of the polymerizable composition for forming the transparent polymer layer 21P and the liquid crystal compound LCM, the NI point is preferable 145°C or lower.

The CN point of the liquid crystal compound LCM is the temperature at which the liquid crystal compound LCM transitions from the crystalline phase (C phase) to the nematic phase (N phase). The CN point of the liquid crystal compound LCM indicates the degree to which the fluidity of the liquid crystal compound LCM disappears at an ambient temperature. When the liquid crystal compound LCM is a combination of two or more compounds, the CN point of the liquid crystal compound LCM is lower than the weighted average value of the CN points of the respective compounds weighted by the formulation ratio of each compound. It is possible to increase or decrease the CN point of the liquid crystal compound LCM by the composition of two or more compounds with mutually different NI points. When it is required to enhance the fluidity of the liquid crystal compound LCM at low ambient temperatures, such as -20°C, the CN point is preferably 25°C or lower, and more preferably 0°C or lower.

The refractive index difference $\Delta n$ ($\Delta n$ = extraordinary refractive index ne - ordinary refractive index no) between the major and minor axis directions of the liquid crystal compound LCM indicates the degree of attractive or repulsive force in the liquid crystal compound LCM. Further, the refractive index difference $\Delta n$ of the liquid crystal compound LCM is the difference in refractive index to visible light with a wavelength of 650 nm, and indicates the difference in the degree of scattering of visible light between when a drive signal is supplied and when it is not. When the liquid crystal compound LCM is a combination of two or more compounds, the upper limit of the refractive index difference $\Delta n$ of the liquid crystal compound LCM is obtained from the refractive index difference $\Delta n$ of all of the compounds. The lower limit of the refractive index difference $\Delta n$ of the liquid crystal compound LCM is obtained from the refractive index difference $\Delta n$ of all of the compounds.

When it is required to enhance the alignment controllability of the liquid crystal compound LCM at high ambient temperatures, the lower limit of the refractive index difference $\Delta n$ is preferably high. When it is required to increase the difference in haze between transparent and opaque, the lower limit of the refractive index difference $\Delta n$ is preferably high. When it is required to enhance the alignment controllability of the liquid crystal compound LCM at high ambient temperatures, such as 100°C, the lower limit of the refractive index difference $\Delta n$ of the liquid crystal compound LCM is preferably 0.05, and more preferably 0.1. When it is required to increase the difference in haze, the lower limit of the refractive index difference $\Delta n$ of the liquid crystal compound LCM is preferably 0.05, and more preferably 0.1.

The dichroic dye DP enhances the visible light absorbance in the major axis direction of the molecule more than the visible light absorbance in the minor axis direction of the molecule. The dichroic dye DP is driven as a guest-host type with the liquid crystal compound LCM as a host. The dichroic dye DP reversibly changes from transparent to colored in response to the change in orientation of the liquid crystal compound LCM. The liquid crystal composition 21LC contains a single type of dichroic dye DP or a combination of two or more types of dichroic dyes DP. The combination of the dichroic dyes DP is appropriately adjusted so that the color exhibited by the combination of the dichroic dyes DP is the color exhibited by the light control sheet in the opaque state.

The color exhibited by the light control sheet in the opaque state may be black or black with chromatic color. An example of the dichroic dye DP causes the light control sheet in the opaque state to have both the chromaticity a* and chromaticity b* of -15 or greater and 15 or less in the CIE 1976 (L*a*b*) color system. The chromaticity a* and chromaticity b* in the CIE 1976 (L*a*b*) color system are specified according to the method for calculating color coordinates in the CIE 1976 (L*a*b*) color space specified in JIS-Z-8781-4 (ISO 11664-4). The ratio of the mass of the dichroic dye DP relative to the total mass of the light control layer 21 is the formulation ratio of the dichroic dye DP. The formulation ratio of the dichroic dye DP may be 0.2 mass% or greater and 5 mass% or less, preferably 1 mass% or greater and 4 mass% or less, and more preferably 2 mass% or greater and 4 mass% or less. Increasing the formulation ratio of the dichroic dye DP improves the contrast of the light control device 10, while reducing the responsiveness of the liquid crystal compound LCM. From the perspective of improving the contrast of the light control device 10, the formulation ratio of the dichroic dye DP is preferably the upper limit of the range in which responsiveness of the liquid crystal compound LCM can be obtained.

The dichroic dye DP is driven as a guest-host type with the liquid crystal compound LCM as a host to develop a specific color.

The dichroic dye DP may be at least one selected from the group consisting of polyiodides, azo compounds, anthraquinone compounds, naphthoquinone compounds, azomethine compounds, tetrazine compounds, quinophthalone compounds, merocyanine compounds, perylene compounds and dioxazine compounds. The dichroic dye DP is a single compound or a combination of two or more compounds. When it is required to enhance light resistance and increase the dichroic ratio, the dichroic dye DP is at least one selected from the group consisting of azo compounds and anthraquinone compounds, and more preferably azo compounds.

The light control layer 21 may contain spacers. The spacers are dispersed throughout the light control layer 21. The thickness of the spacers defines the thickness of the light control layer 21 around the spacers, and makes the thickness of the light control layer 21 uniform.

The spacers may be bead spacers or photospacers formed by exposure and development of photoresist. The spacers may be colorless transparent or colored transparent. When it is required to suppress the visibility of the spacers in the opaque state of the light control sheet or suppress the brightness of the color exhibited by the light control sheet in the opaque state, the color exhibited by the spacers may be the same color as the color exhibited by the light control sheet in the opaque state or may be the same color as the color exhibited by the dichroic dye DP.

The thickness of the light control layer 21 may be 2 $\mu$m or greater and 30 $\mu$m or less, and preferably 5 $\mu$m or greater and 25 $\mu$m or less. When it is required to enhance the effect of the alignment control force on the liquid crystal compound LCM, the thickness of the light control layer 21 is preferably 5 $\mu$m or greater and 25 $\mu$m or less. When the transparent polymer layer 21P is formed by phase separation, the thickness of the light control layer 21 of 5 $\mu$m or greater makes it possible to unevenly distribute the voids 21D having a diameter of 1 $\mu$m or less. Further, it also makes it possible for the light control layer 21 to have regions with different densities of the liquid crystal composition 21LC in the thickness direction of the light control layer 21. The thickness of the light control layer 21 of 25 $\mu$m or less enables appropriate phase separation between the liquid crystal compound LCM and the transparent polymer layer 21P when a coating liquid containing the liquid crystal compound LCM and the polymerizable composition is exposed to light during production of the light control layer 21.

The first alignment layer 22 exerts an alignment control force on the liquid crystal compound LCM via a surface of the light control layer 21 in contact with the first alignment layer 22. The second alignment layer 23 exerts an alignment control force on the liquid crystal compound LCM via a surface of the light control layer 21 in contact with the second alignment layer 23. The alignment layers 22 and 23 have optical transparency to visible light.

The alignment layers 22 and 23 may be vertical alignment layers. The alignment control force applied by the vertical alignment layers align the major axis direction of the liquid crystal compound LCM to be perpendicular to the surfaces of the alignment layers 22 and 23 in contact with the light control layer 21. The alignment layers 22 and 23 may align the liquid crystal compound LCM so that the major axis of the liquid crystal compound LCM is tilted by several degrees from the perpendicular within the range that is determined to be substantially perpendicular to the transparent electrode layers 24 and 25. The thickness of each of the alignment layers 22 and 23 may be 0.02 $\mu$m or greater and 0.5 $\mu$m or less, and preferably 0.05 $\mu$m or greater and 0.3 $\mu$m or less.

The material constituting the alignment layers 22 and 23 may be an organic compound, an inorganic compound or an organic-inorganic composite material. The material constituting the first alignment layer 22 may be the same or different from the material constituting the second alignment layer 23. The organic compound constituting the alignment layers 22 and 23 may be at least one selected from the group consisting of polyimides, polyamides, polyvinyl alcohols and nitriles. The inorganic compound constituting the alignment layers 22 and 23 may be silicon oxide or zirconium oxide. The organic-inorganic composite material constituting the alignment layers 22 and 23 may be silicone having an inorganic structure and an organic structure.

The first transparent electrode layer 24 and the second transparent electrode layer 25 form an electric field in the thickness direction of the light control layer 21 in response to an input of a drive signal. The transparent electrode layers 24 and 25 have optical transparency to visible light. The thickness of each of the transparent electrode layers 24 and 25 may be 0.005 $\mu$m or greater and 0.1 $\mu$m or less.

The material constituting the transparent electrode layers 24 and 25 may be an inorganic compound, an organic compound or an organic-inorganic composite material. The inorganic compound constituting the transparent electrode layers 24 and 25 may be at least one selected from the group consisting of indium tin oxide, fluorine-doped tin oxide, tin oxide and zinc oxide. The organic compound constituting the transparent electrode layers 24 and 25 may be poly(3,4-ethylenedioxythiophene). The organic-inorganic composite material constituting the transparent electrode layers 24 and 25 may be an organic compound containing metal nanowires.

The first transparent substrate 26 supports the first transparent electrode layer 24. The second transparent substrate 27 supports the second transparent electrode layer 25. The transparent substrates 26 and 27 may be flexible enough to follow a curved surface to which the light control sheet is attached, or may be rigid enough not to deform under its own weight. At least one of the transparent substrates 26 and 27 is attached to an object to which the light control sheet is applied. The thickness of each of the transparent substrates 26 and 27 may be 15 $\mu$m or greater and 250 $\mu$m or less. The thickness of each of the transparent substrates 26 and 27 of 15 $\mu$m or greater enhances the mechanical durability of the light control sheet and the chemical durability of the light control layer 21. The thickness of each of the transparent substrates 26 and 27 of 250 $\mu$m or less enables roll-to-roll production of the light control sheet.

The material constituting the transparent substrates 26 and 27 may be an organic compound or an inorganic compound. The organic compound constituting the transparent substrates 26 and 27 may be at least one selected from the group consisting of polyesters, polyacrylates, polycarbonates and polyolefins. The inorganic compound constituting the transparent substrates 26 and 27 may be at least one selected from the group consisting of silicon dioxide, silicon oxynitride and silicon nitride. An adhesive applied to the transparent substrates 26 and 27 is a resin having transparent adhesiveness and insulating properties. The adhesive for the transparent substrates 26 and 27 may be, for example, an optical clear adhesive (OCA).

The electrodes 24A and 25A may be flexible print substrates or metal tapes. The electrodes 24A and 25A may be attached to the transparent electrode layers 24 and 25, respectively, via a conductive adhesive layer. The driving unit 12 inputs a drive signal to the light control layer 21 through the transparent electrode layers 24 and 25. The drive signal may be an AC voltage signal or a DC voltage signal.

The light control layer 21 changes the orientation of the liquid crystal compound LCM in response to a change in electric field formed between two transparent electrode layers 24 and 25. The change in the orientation of the liquid crystal compound LCM changes the degree of scattering, absorption and transmission of visible light entering the light control layer 21.

When an electric field is formed in the light control layer 21, that is, when a potential difference is applied between two transparent electrode layers 24 and 25, the units 11UN1 and 11UN2 drive the liquid crystal compound LCM against the alignment control force of the alignment layers 22 and 23, and the like, resulting in relatively high haze. When a voltage is applied to the light control layer 21, the units 11UN1 and 11UN2 become turbid, that is, opaque due to scattering caused by a refractive index difference between the transparent polymer layer 21P and the liquid crystal compound LCM. The dichroic dye follows the driving of the liquid crystal compound LCM and is oriented to increase the absorbance. Accordingly, when a voltage is applied to the light control layer 21, the units 11UN1 and 11UN2 become colored and opaque.

When a voltage is not applied to the light control layer 21, that is, when a potential difference is not applied between two transparent electrode layers 24 and 25, the units 11UN1 and 11UN2 follow the alignment control force of the alignment layers 22 and 23, resulting in lower haze than when a potential difference is applied. When a voltage is not applied to the light control layer 21, the units 11UN1 and 11UN2 reduces a refractive index between the transparent polymer layer 21P and the liquid crystal compound LCM to thereby suppress scattering of light in the light control layer 21. The dichroic dye DP follows the alignment of the liquid crystal compound LCM and is oriented to reduce the absorbance. Accordingly, when a voltage is not applied to the light control layer 21, the units 11UN1 and 11UN2 become colorless transparent.

The state in which one light control sheet is colored opaque is a dark state of the light control device 10 of the first example. The state in which the units 11UN1 and 11UN2 are colored opaque is a dark state of the light control device 10 of the second example. The colored opaque may be black opaque or colored opaque other than black.

The state in which one light control sheet is transparent is a light state of the light control device 10 of the first example. The state in which the units 11UN1 and 11UN2 are transparent is a light state of the light control device 10. The transparent may be colorless transparent or colored transparent. The colored transparent may be black transparent or colored transparent other than black.

The light control sheet may have a translucent state between transparent and opaque. The translucent may be colorless translucent or colored translucent. The colored translucent may be black translucent or colored translucent other than black. The driving unit 12 that provides translucency sets a voltage applied to the light control layer 21 to an intermediate value between transparent and opaque.

The total light transmittance of the light control device 10 in the dark state is lower than the total light transmittance of the light control device 10 in the light state. The light control device 10 of the second example may make the first light control unit 11UN1 colored opaque and make the second light control unit 11UN2 colored opaque. The light control device 10 may make the first light control unit 11UN1 opaque and make the second light control unit 11UN2 translucent. The light control device 10 of the second example may make the first light control unit 11UN1 opaque and make the second light control unit 11UN2 transparent.

[Optical Properties of Light Control Sheet]

The light control layer 21 of the light control device 10 changes the orientation of the liquid crystal compound LCM in response to a change in voltage between two transparent electrode layers 24 and 25. The change in the orientation of the liquid crystal compound LCM changes the degree of scattering, absorption and transmission of visible light entering the light control layer 21. Scattering of visible light makes the light control layer 21 turbid, that is, opaque or translucent. Scattering and absorption of visible light makes the light control layer 21 dark opaque or dark translucent.

When it is required to improve the contrast in the light control device 10 including a reverse type light control sheet, the light control sheet in both the light control device 10 of the first example and the light control device 10 of the second example may satisfy the following Condition 1-1. When it is required to further improve the contrast, the light control device 10 including a reverse type light control sheet is preferably the light control device 10 of the second example. The contrast between transparent and opaque states is improved when the transmittance of the parallel component of total light passing through the light control sheet is 2% or less.

The thickness of the light control layer 21 in the reverse type light control sheet using an alignment control force allows an alignment control force to be applied across the entire thickness. Accordingly, the thickness of the light control layer 21 in the reverse type light control sheet is required to be thinner than the light control layer 21 in the normal type light control sheet. The reverse type light control sheet with a limited thickness of the light control layer 21 is not likely to improve the contrast compared to the normal type light control sheet.

In the reverse type light control sheet in which an alignment control force is continuously applied, it is more difficult to obtain random alignment of the liquid crystal compound LCM compared to the light control sheet in which an alignment control force is not applied. The reverse type light control sheet, in which it is more difficult to obtain random alignment, is less likely to improve the contrast compared to the light control sheet, for which it is easy to obtain random alignment.

Accordingly, the reverse type light control sheet is more strongly required to improve the contrast compared to the normal type light control sheet or a light control sheet having no alignment layers 22 and 23.

When it is required to further improve the contrast in the light control device 10 including a reverse type light control sheet, the light control sheet in both the light control device 10 of the first example and the light control device 10 of the second example may satisfy at least one of Conditions 1-2 to 1-4 in addition to Condition 1-1. Satisfying at least one of Conditions 1-2 to 1-4 may be satisfying one selected from the group of Conditions 1-2 to 1-4 or satisfying a combination of two or more selected from the group of Conditions 1-2 to 1-4.

(Condition 1-1) Parallel light transmittance of the light control device 10 in the opaque state, which is a dark state, is 2% or less.

(Condition 1-2) Haze of the light control device 10 in the opaque state, which is a dark state, is 96% or greater.

(Condition 1-3) Total light transmittance of the light control device 10 in the opaque state, which is a dark state, is 7% or less.

(Condition 1-4) Diffuse transmittance of the light control device 10 in the opaque state, which is a dark state, is 6% or less.

When it is required to improve the contrast in the light control device 10 including a normal type light control sheet, the light control sheet in both the light control device 10 of the first example and the light control device 10 of the second example may satisfy the following Condition 1-5. When it is required to further improve the contrast in the light control device 10 including a normal type light control sheet, the light control sheet in both the light control device 10 of the first example and the light control device 10 of the second example may satisfy Condition 1-6 or 1-7 in addition to Condition 1-5.

(Condition 1-5) Parallel light transmittance of the light control sheet in the opaque state is 1% or less.

(Condition 1-6) Total light transmittance of the light control sheet in the opaque state is 3.6% or less.

(Condition 1-7) Diffuse transmittance of the light control sheet in the opaque state is 3.2% or less.

When Condition 1-1 or 1-5 is satisfied, most of the total light passing through the light control sheet is a diffuse component. This increases the degree of turbidity of the light control sheet in the opaque state, and blurs images of objects seen through the light control sheet.

When Condition 1-3 or 1-6 is satisfied, a difference in total light transmittance between transparent and opaque states of the light control device 10 increases, which improves the contrast. Further, when Condition 1-3 or 1-6 is satisfied, a total transmittance of the parallel component and the diffuse component is reduced, preventing an object from being seen through the light control sheet.

When Condition 1-4 or 1-7 is satisfied, a diffuse component of the total light passing through the light control device 10 can be reduced. This suppresses the brightness due to the diffuse component in the opaque state, improving the contrast of the light control device 10.

In Condition 1-1, the parallel light transmittance of the light control device 10 in the opaque state is preferably 0.5% or less. This reduces the transmittance of the parallel component when the light control device 10 is in the opaque state, further preventing an object from being seen through the light control device 10. Further, when the parallel light transmittance of the light control device 10 in the opaque state is 0.5% or less, the haze of the light control device 10 in the opaque state is preferably 96% or greater. This reduces the transmittance of the parallel component when the light control device 10 is in the opaque state, and blurs images of objects seen through the light control device 10. As a result, it is possible to further prevent an object from being seen through the light control device 10.

The light control sheet tends to decrease the parallel light transmittance in the opaque state as the concentration of the dichroic dye DP contained in the light control layer 21 increases. When it is required to reduce the parallel light transmittance of the light control sheet in the opaque state, the parallel light transmittance of the light control sheet in the opaque state may be adjusted by increasing the concentration of the dichroic dye **DP** in the light control layer 21.

The light control sheet tends to decrease the parallel light transmittance in the opaque state as the optical path length of light entering the light control layer 21 increases. When it is required to reduce the parallel light transmittance of the light control sheet in the opaque state, the parallel light transmittance of the light control sheet in the opaque state may be adjusted by increasing the thickness of the light control layer 21. Alternatively, when it is required to reduce the parallel light transmittance of the light control sheet in the opaque state, the parallel light transmittance of the light control sheet in the opaque state may be adjusted by increasing the number of light control layers 21 provided in the light control device 10.

The light control sheet in the light control device 10 of the second example, whether reverse or normal type, may satisfy at least one of Conditions 2-1 and 2-2. When it is required to reduce the thickness of the light control device 10, it is preferred that the light control sheets in the light control device 10 of the second example are of a reverse type and satisfy at least one of the following Conditions 2-1 and 2-2. Satisfying at least one of Conditions 2-1 and 2-2 may be satisfying Condition 2-1, satisfying Condition 2-2, or satisfying both Conditions 2-1 and 2-2.

When it is required to further improve the contrast of the light control device 10 of the second example, each light control sheet in the light control device 10, whether reverse or normal type, preferably satisfies at least one of the following Conditions 2-3 to 2-6. Satisfying at least one of Conditions 2-3 to 2-6 may be satisfying one selected from the group of Conditions 2-3 to 2-6 or satisfying a combination of two or more selected from the group of Conditions 2-3 to 2-6.

Each light control sheet in the light control device 10 of the second example may satisfy the following Condition 2-8 instead of or in addition to the following Condition 2-2.

(Condition 2-1) Haze of each light control sheet in the opaque state is 79% or greater.

(Condition 2-2) Absorbance difference, which is a value obtained by subtracting the average absorbance of the liquid crystal composition 21LC from the absorbance of each light control sheet in the opaque state, is 0.4 or greater.

(Condition 2-3) Total light transmittance of each light control sheet in the opaque state is 25% or less.

(Condition 2-4) Diffuse transmittance of each light control sheet in the opaque state is 16% or less.

(Condition 2-5) Parallel light transmittance of each light control sheet in the opaque state is 5% or less.

(Condition 2-6) Clarity of each light control sheet in the opaque state is 95% or less.

(Condition 2-8) Absorbance difference, which is a value obtained by subtracting the horizontal absorbance of the liquid crystal composition 21LC from the absorbance of each light control sheet in the opaque state, is 0.1 or greater.

When it is required to improve the contrast in the light control device 10, the light control sheet in both the light control device 10 of the first example and the light control device 10 of the second example, whether normal or reverse type, may satisfy the following Condition 3-1. Further, the light control sheet of the light control device 10 may satisfy at least one of following Conditions 3-2 and 3-3 in addition to Condition 3-1. Satisfying at least one of Conditions 3-2 and 3-3 may be satisfying Condition 3-2, satisfying Condition 3-3, or satisfying both Conditions 3-2 and 3-3.

When it is required to further improve the contrast of the light control device 10, the light control sheet of the light control device 10 preferably satisfies at least one of the following Conditions 3-4 to 3-7. Satisfying at least one of Conditions 3-4 to 3-7 may be satisfying one selected from Conditions 3-4 to 3-7 or satisfying a combination of two or more selected from Conditions 3-4 to 3-7.

When the light control sheet of the light control device 10 is a reverse type, the light control sheet of the light control device 10 may satisfy the following Condition 3-8 instead of the following Condition 3-3.

(Condition 3-1) Absorbance difference, which is a value obtained by subtracting the average absorbance of the liquid crystal composition 21LC from the absorbance of the light control device 10 in the opaque state, which is a dark state, is 0.8 or greater.

(Condition 3-2) Haze of the light control device 10 in the opaque state, which is a dark state, is 96% or greater.

(Condition 3-3) Absorbance difference, which is a value obtained by subtracting the average absorbance of the liquid crystal composition 21LC from the absorbance of the light control device 10 in the opaque state, which is a dark state, is 0.9 or greater.

(Condition 3-4) Total light transmittance of the light control device 10 in the opaque state, which is a dark state, is 7% or less.

(Condition 3-5) Diffuse transmittance of the light control device 10 in the opaque state, which is a dark state, is 6% or less.

(Condition 3-6) Parallel light transmittance of the light control device 10 in the opaque state, which is a dark state, is 2% or less.

(Condition 3-7) Clarity of the light control device 10 in the opaque state, which is a dark state, is 80% or less.

(Condition 3-8) Absorbance difference, which is a value obtained by subtracting the horizontal absorbance of the liquid crystal composition 21LC from the absorbance of the light control device 10 in the opaque state, which is a dark state, is 0.3 or greater.

The haze is measured by a measurement method in accordance with ASTM D 1003-00. A haze meter may be, for example, BYK haze-gard i indtrument (manufactured by BYK Gardner). In measurement of haze, light contained in the light flux incident on the light control device 10 is direct light. The maximum angle between the light contained in the light flux incident on the light control device 10 and the optical axis of the light flux is less than 3°. The light control device 10 is fixed so that a surface of the light control device 10 and the light flux incident on the surface are substantially orthogonal within the range of ±2°.

Among transmitted light that has passed through the light control device 10, light deflected by ±2.5° or more from the light flux incident on the light control device 10 is wide-angle scattered light. Haze is the percentage of wide-angle scattered light due to forward scattering in the transmitted light that has passed through the light control device 10. Diffuse transmittance is the percentage of wide-angle scattered light due to forward scattering in the light that has been incident on the light control device 10.

Among transmitted light that has passed through the light control sheet, light deflected by $\pm 2.5°$ or less from the light flux incident on the light control sheet is parallel transmitted light. Parallel light transmittance is the percentage of parallel transmitted light due to forward scattering in the light that has been incident on the light control sheet. Total light transmittance is the sum of diffuse transmittance and parallel light transmittance.

Among transmitted light that has passed through the light control sheet, light that is not deflected from the light flux incident on the light control sheet is direct transmitted light. Light deflected by $\pm 2.5°$ or less from the direct transmitted light is parallel transmitted light described above. Clarity is calculated according to the following formula (1) using the intensity of direct transmitted light LC and the intensity of parallel transmitted light LR.

$$100 \times (LR\text{-}LC)/(LR\text{+}LC) \ldots \text{formula (1)}$$

Total light transmittance, diffuse transmittance, parallel light transmittance and clarity are obtained by measurement in accordance with ASTM D 1003-00.

Absorbance is measured by a measurement method in accordance with JIS K 0115:2004 using an absorption photometer. The light source of the absorption photometer is a white LED that irradiates visible light of 380 nm or greater and 780 nm or less. The photometry unit of the absorption photometer detects light intensity in the entire visible light range of 380 nm or greater and 780 nm or less.

The contrast of the light control device 10 is the ratio of the total light transmittance in the transparent state to the total light transmittance in the opaque state. That is, the contrast of the light control device 10 is the ratio of the total light transmittance in the light state to the total light transmittance in the dark state. The total transmitted light passing through the light control sheet constituting the light control device 10 includes direct transmitted light passing through the light control sheet without being scattered by the light control sheet and scattered light scattered by the light control sheet.

The total light transmittance of the light control device 10 depends on the sum of the intensities of direct transmitted light and scattered light. The haze of the light control device 10 is the ratio of the diffuse transmittance to the total light transmittance. That is, the haze of the light control device 10 depends on the intensity of scattered light relative to the sum of the intensities of direct transmitted light and scattered light. Even if the sum of the intensities of direct transmitted light and scattered light is constant, the intensity of scattered light relative to the sum of the intensities of direct transmitted light and scattered light varies. Accordingly, the total light transmittance and the haze are optical properties that can independently vary.

Increasing the formulation ratio of the dichroic dye DP in the liquid crystal composition 21LC simply decreases the intensity of scattered light. Increasing the formulation ratio of the dichroic dye DP decreases the total light transmittance due to the decrease in the intensity of scattered light, enabling improvement in the contrast. However, the formulation ratio of the dichroic dye DP is actually set to substantially the upper limit of the range in which the response of the liquid crystal compound LCM can be obtained. Accordingly, increasing the formulation ratio of the dichroic dye DP has limitation in terms of increasing the contrast of the light control device 10.

On the other hand, the light absorption properties of the dichroic dye DP show high absorbance for scattered light and low absorbance for direct transmitted light based on the dichroic ratio. Such absorbance of the dichroic dye DP causes the absorbance of the light control device 10 to exponentially and steeply increase with the optical path length of the light control device 10 as a variable. Promoting scattering of direct transmitted light in the light control sheet reduces the total light transmittance in the opaque state, enabling improvement in the contrast. However, in order to steeply increase the absorption by the dichroic dye DP, it is necessary not only to simply promote scattering of the direct transmitted light, but also to increase scattering to the extent that the light scattered at the interface between the transparent polymer layer 21P and the liquid crystal composition 21LC reaches the dichroic dye DP.

The inventors of the present invention have diligently studied the relationship between the contrast of the light control device 10 and the optical properties of the light control device 10, and found a range of the haze of the light control sheets overlapped each other that steeply increases the contrast. The light control device 10 satisfying the above Condition 2-1, in which the haze of the light control sheets in the opaque state is 79% or greater, significantly increases the contrast of the light control device 10.

Further, the absorbance of the light control sheet in the opaque state reflects the fact that the light scattered at the interface between the transparent polymer layer 21P and the liquid crystal composition 21LC is absorbed by the dichroic dye DP. On the other hand, the absorbance of the liquid crystal compound LCM itself, which is considered to produce the opaque state, does not reflect extension of the optical path length due to scattering, that is, an increased absorption due to extended optical path length. The absorbance difference, which is a value obtained by subtracting the absorbance of the liquid crystal composition 21LC, which is considered to produce the opaque state, from the absorbance in the opaque state, indicates an increased absorption due to extended optical path length.

The absorbance of the liquid crystal composition 21LC considered to produce the opaque state may be a value that can approximate the absorbance of the liquid crystal composition 21LC in the opaque state. The absorbance of the liquid crystal composition 21LC considered to produce the opaque state may be, for example, the average value of the vertical absorbance and horizontal absorbance in the liquid crystal composition 21LC, which is considered to be the absorbance of the liquid crystal compound LCM randomly aligned. Alternatively, since the liquid crystal compound LCM in the opaque state can be between random alignment and horizontal alignment, the absorbance of the liquid crystal composition 21LC considered to produce the opaque state may be, for example, the horizontal absorbance of the liquid crystal composition 21LC.

The inventors of the present invention have diligently studied the relationship between the contrast of the light control device 10 and the optical properties of the light control device 10 of the second example, and found a range of the absorbance difference of the light control sheets overlapped with each other that steeply increases the contrast. The light control device 10 satisfying the above Condition 2-2, in which the average absorbance difference of the light control sheets is 0.4 or greater, significantly increases the contrast of the light control device 10. Further, the light control device 10 satisfying the above Condition 2-8, in which the horizontal absorbance difference of the light control sheets is 0.1 or greater, significantly increases the contrast of the light control device 10.

Also, the inventors of the present invention have diligently studied the relationship between the contrast of the light control device 10 and the optical properties of the light control device 10 of the second example, and found a range of the total light transmittance, diffuse transmittance, parallel light transmittance and clarity of the light control device 10 that increases the contrast. The light control device 10 satisfying the above Condition 2-3, in which the total light transmittance of the light control sheets overlapped with each other is 25% or less, increases the contrast of the light control device 10. The light control device 10 satisfying the above Condition 2-4, in which the diffuse transmittance of the light control sheets overlapped with each other is 16% or less, increases the contrast of the light control device 10. The light control device 10 satisfying the above Condition 2-5, in which the parallel light transmittance of the light control sheets overlapped with each other is 5% or less, increases the contrast of the light control device 10. The light control device 10 satisfying the above Condition 2-6, in which the clarity of the light control sheets overlapped with each other is 95% or less, increases the contrast of the light control device 10.

The inventors of the present invention have diligently studied the relationship between the contrast of the light control device 10 and the optical properties of the light control device 10 of the first example and second example, and found a range of the absorbance difference of the light control device 10 that steeply increases the contrast. The light control device 10 satisfying the above Condition 3-1, in which the average absorbance difference of the light control device 10 is 0.8 or greater, significantly increases the contrast of the light control device 10 of the first example and second example.

Also, the inventors of the present invention have diligently studied the relationship between the contrast of the light control device 10 and the optical properties of the light control device 10 of the first example and second example, and found a range of the haze of the light control device 10 that steeply increases the contrast. The light control device 10 satisfying the above Conditions 3-1 and 3-2, in which the haze of the light control device 10 in the opaque state is 96% or greater, increases the effectiveness of significantly increasing the contrast of the light control device 10.

Also, the inventors of the present invention have diligently studied the relationship between the contrast of the light control device 10 and the optical properties of the light control device 10 of the first example and second example, and found a range of the absorbance difference of the light control device 10 that steeply increases the contrast. The light control device 10 satisfying the above Condition 3-3, in which the average absorbance difference of the light control device 10 is 0.9 or greater, further significantly increases the contrast of the light control device 10. The light control device 10 satisfying the above Condition 3-8, in which the horizontal absorbance difference of the light control device 10 is 0.3 or greater, significantly increases the contrast of the light control device 10.

[Distribution of Voids 21D]

In Figs. 3 and 4, the transparent substrates 26 and 27 are omitted for convenience of illustration. In Figs. 3 and 4, for ease of description of the structure of the light control layer 21, the ratio of the thickness of the light control layer 21 to the thickness of each of the alignment layers 22 and 23 and the thickness of each of the transparent electrode layers 24 and 25 is larger than the actual ratio. Figs. 3 and 4 schematically illustrates the state of the light control layer 21 when no potential difference is applied between the transparent electrode layers 24 and 25.

As shown in Fig. 3, an example of the light control layer 21 may include a first high density portion 21H1, a second high density portion 21H2 and a low density portion 21L.

The density of the liquid crystal composition 21LC per unit thickness in the first high density portion 21H1 is higher than the density of the liquid crystal composition 21LC per unit thickness in the low density portion 21L. The quantity density of the voids 21D per unit thickness in the first high density portion 21H1 is higher than the quantity density of the voids 21D per unit thickness in the low density portion 21L. The first high density portion 21H1 is in contact with the first alignment layer 22.

The density of the liquid crystal composition 21LC per unit thickness in the second high density portion 21H2 is higher than the density of the liquid crystal composition 21LC per unit thickness in the low density portion 21L. The quantity density of the voids 21D per unit thickness in the second high density portion 21H2 is higher than the quantity density of the voids 21D per unit thickness in the low density portion 21L. The second high density portion 21H2 is in contact with the second alignment layer 23.

The density of the liquid crystal composition 21LC in the light control layer 21 is lowest at the middle of the light control layer 21 in the thickness direction. The middle of the light control layer 21 in the thickness direction is a portion closer to the center of the light control layer 21 than to both surfaces of the light control layer 21 facing each other in the thickness direction. The density of the liquid crystal composition 21LC per unit thickness in each portion of the light control layer 21 is calculated by dividing the volume of the liquid crystal composition 21LC in each portion by the thickness of each portion. The density of the liquid crystal composition 21LC in the light control layer 21 may be lowest in a portion including the center of the light control layer 21 in the thickness direction.

Since the light control layer 21 is very thin, an SEM image of a cross-section of the light control layer 21 may be used to determine an area of the liquid crystal composition 21LC and an area the light control layer 21 as an approximation of each density, instead of calculating the volume of the liquid crystal composition 21LC included in the light control layer 21.

The quantity density of the voids 21D in the transparent polymer layer 21P is lowest at the middle of the light control layer 21 in the thickness direction. The quantity density of the voids 21D per unit thickness in each portion of the transparent polymer layer 21P is calculated by dividing the quantity of the voids 21D in each portion by the thickness of each portion. The quantity density of the voids 21D in the transparent polymer layer 21P may be lowest in a portion including the center of the light control layer 21 in the thickness direction.

The liquid crystal compound LCM, when unevenly distributed in the transparent polymer layer 21P in the vicinity of the alignment layers 22 and 23, increases the effect of the alignment control force of the alignment layers 22 and 23. Such uneven distribution of the liquid crystal compound LCM increases the light transmittance of the light control device 10 in the transparent state.

In the light control layer 21, for example, a thickness TH1 of the first high density portion 21H1, a thickness TH2 of the second high density portion 21H2 and a thickness TL of the low density portion 21L are substantially equal to each other. That is, an example of the thickness TH1 of the first high density portion 21H1, the thickness TH2 of the second high density portion 21H2 and the thickness TL of the low density portion 21L are each 1/3 of a thickness T21 of the light control layer 21. The thickness TL of the low density portion 21L may be larger or smaller than each of the thicknesses TH1 and TH2 of the high density portions 21H1 and 21H2. Further, the thickness TH1 of the first high density portion 21H1 may be equal to or different from the thickness of the second high density portion 21H2.

In the cross-section of the light control layer 21 in the thickness direction, the percentage of the sum of the areas of the voids 21D included in the low density portion 21L in the area of the low density portion 21L may be 10% or less. Accordingly, since the percentage of the liquid crystal composition 21LC held in the voids 21D of the low density portion 21L can be reduced, it is possible to prevent the liquid crystal compound LCM contained in the low density portion 21L from increasing the opacity of the light control sheet when no potential difference is applied between the transparent electrode layers 24 and 25.

Furthermore, the low density portion 21L may not necessarily include the voids 21D. In other words, the low density portion 21L may not necessarily include the liquid crystal composition 21LC. Accordingly, all molecules of the liquid crystal compound LCM contained in the light control layer 21 are easily aligned in accordance with the alignment control force from the alignment layers 22 and 23 and/or reactive mesogenic compound so that the haze of the light control sheet can be further reduced when no voltage difference is applied between the transparent electrode layers 24 and 25.

Thus, in the low density portion 21L, the sum of the areas of the voids 21D relative to the area of the low density portion 21L may be 10% or less, preferably 5% or less, and more preferably 0%. Further, the voids 21D may be located within the range of 3.0 $\mu$m or less from the first alignment layer 22 and within the range of 3.0 $\mu$m or less from the second alignment layer 23 in the cross-section of the light control layer 21 in the thickness direction.

When it is required to enhance the alignment control force acting on the liquid crystal compound LCM, the voids 21D contained in the first high density portion 21H1 are preferably in contact with the first alignment layer 22. Further, the voids 21D contained in the second high density portion 21H2 are preferably in contact with the second alignment layer 23.

In the light control sheet, the thickness T21 of the light control layer 21 may be 2 $\mu$m or greater and 30 $\mu$m or less, and the diameter of the voids 21D may be 0.1 $\mu$m or greater and 2 $\mu$m or less. The diameter of the voids 21D is the diameter of circles circumscribing the voids 21D in a cross section in the thickness direction of the light control layer 21. When the thickness of the light control layer 21 is 2 $\mu$m or greater and 30 $\mu$m or less and the diameter of the voids 21D is 0.1 $\mu$m or greater and 2 $\mu$m or less, it is possible to prevent the voids 21D from being formed at positions away from the alignment layers 22 and 23. When the voids 21D have a size of 0.1 $\mu$m or greater and 2 $\mu$m or less, the liquid crystal composition 21LC is held in the vicinity of the alignment layers 22 and 23. Accordingly, it is possible to increase the transparency of the light control sheet when no voltage difference is applied between the transparent electrode layers 24 and 25. When it is required to increase the degree of scattering due to the voids 21D, the size of the voids 21D is preferably 2 $\mu$m or less. When it is required to suppress the degree of narrow angle scattering due to the voids 21D, the size of the voids 21D is preferably 0.1 $\mu$m or smaller.

As shown in Fig. 4, another example of the light control layer 21 includes a single void layer formed of a plurality of voids 21D in contact with the first alignment layer 22 and a single void layer formed of a plurality of voids 21D in contact with the second alignment layer 23. In each void layer, a single array of voids 21D is arranged on the interface between each of the alignment layers 22 and 23 and the light control layer 21.

The void layer in contact with the first alignment layer 22 includes at least one void 21D in contact with other voids 21D in the void layer in contact with the second alignment layer 23. All the voids 21D contained in the void layer in contact with the first alignment layer 22 may be in contact with other voids 21D contained in the void layer in contact with the second alignment layer 23.

In the void layer in contact with the first alignment layer 22, a surface in contact with the first alignment layer 22 is a first surface, and a surface on a side opposite to that in contact with the first surface is a second surface. The second surface is a plane including portions of the voids 21D contained in the void layer that is farthest from the first alignment layer 22. In the void layer in contact with the second alignment layer 23, a surface in contact with the second alignment layer 23 is a first surface, and a surface on a side opposite to that in contact with the first surface is a second surface. The second surface is a plane including portions of the voids 21D contained in the void layer that is farthest from the second alignment layer 23. The second surface of the void layer in contact with the first alignment layer 22 and the second surface of the void layer in contact with the second alignment layer 23 may be the same surface.

Another example of the light control layer 21 includes a first high density portion 21H1, a second high density portion 21H2 and a low density portion 21L. The low density portion 21L is interposed between the first high density portion 21H1 and the second high density portion 21H2 in the thickness direction of the light control layer 21. The low density portion 21L includes portions where voids 21D are not located in the void layer in contact with the first alignment layer 22, and includes portions where voids 21D are not located in the void layer in contact with the second alignment layer 23. The density of the liquid crystal composition 21LC in the low density portion 21L is smaller than each of the density of the liquid crystal composition 21LC in the first high density portion 21H1 and the density of the liquid crystal composition 21LC in the second high density portion 21H2. The density of the liquid crystal composition 21LC in the intermediate portion of the light control layer 21 in the thickness direction is lowest in the light control layer 21.

[Method of Producing Light Control Sheet]

In production of the light control sheet, first, transparent substrates 26 and 27 on which transparent electrode layers 24 and 25 are formed, respectively, are provided. Next, alignment layers 22 and 23 are formed on the transparent electrode layers 24 and 25, respectively. Next, coating liquid is applied to the alignment layers 22 and 23. The coating liquid contains a polymerizable composition for forming a transparent polymer layer 21P, a liquid crystal compound LCM and a dichroic dye DP. The polymerizable composition is a monomer, oligomer or polymer polymerizable by irradiation with UV light. Next, the coating liquid is irradiated with UV light via the transparent electrode layers 24 and 25. Thus, the transparent polymer layer 21P having voids 21D is formed, and the liquid crystal compound LCM and the dichroic dye DP are held in the voids 21D.

When the coating liquid is cured by irradiation with UV light, the liquid crystal composition 21LC containing the liquid crystal compound LCM and the dichroic dye DP is substantially uniformly distributed in the polymerizable composition. Next, as the polymerizable composition starts curing in the vicinity of the alignment layers 22 and 23, the liquid crystal composition 21LC separates from the polymer of the polymerizable composition. Since a part of the liquid crystal composition 21LC present in the coating film is likely to be stabilized when it is combined with the separated liquid crystal composition 21LC, it migrates toward the alignment layers 22 and 23. Then, when the polymerizable composition is substantially completely cured, a transparent polymer layer 21P is formed with the voids 21D surrounding the liquid crystal composition 21LC.

Until the transparent polymer layer 21P is formed, molecules of the liquid crystal composition 21LC separated from each other form aggregates to stabilize the energy. When the polymerizable composition cures quickly or when the liquid crystal composition 21LC migrates quickly, the liquid crystal composition 21LC is promoted to form aggregates in a wide area, and the size of the voids 21D is increased. The curing rate of the polymerizable composition can be increased by increasing the temperature of the coating liquid when irradiated. On the other hand, when the polymerizable composition cures simultaneously in a wide area, each void 21D is separated from other voids 21D before the liquid crystal composition 21LC form aggregates. The area in which the polymerizable composition cures simultaneously can be increased by increasing the illuminance of UV light irradiating the coating liquid. Since the size that the voids 21D can grow is limited, the area in which the voids 21D are formed tends to reach the low density portion 21L by further increasing the curing rate of the polymerizable composition.

[Test Examples]

Specific Test Examples of the light control sheet will be described below.

The light control sheets of Test Examples 1 to 10 were of a reverse type. The light control sheets of Test Examples 1 to 10 included alignment layers 22 and 23, transparent electrode layers 24 and 25, and transparent substrates 26 and 27. The light control sheets of Test Examples 1 to 10 were obtained by forming, between the alignment layers 22 and 23, a coating film containing a liquid crystal compound LCM, a dichroic dye DP, a reactive mesogenic compound, a UV-curable compound, spacers 21S, and a polymerization initiator, and polymerizing the UV-curable compound in the coating film.

The light control sheets of Test Examples 21 to 24 were of a normal type. The light control sheets of Test Examples 21 to 24 included alignment layers 22 and 23, transparent electrode layers 24 and 25, and transparent substrates 26 and 27. The light control sheets of Test Examples 21 to 24 were obtained by forming, between the alignment layers 22 and 23, a coating film containing a liquid crystal compound LCM, a dichroic dye DP, a reactive mesogenic compound, a UV-curable compound, spacers 21S, and a polymerization initiator, and polymerizing the UV-curable compound in the coating film. The normal type alignment layers 22 and 23 exerted an alignment control force on the dichroic dye DP to enhance light absorption due to horizontal alignment of the dichroic dye DP.

The light control sheets of Test Examples 25 to 37 were of a normal type. The light control sheets of Test Examples 25 to 37 had a configuration in which alignment layers 22 and 23 were omitted, and included transparent electrode layers 24 and 25, and transparent substrates 26 and 27. The light control sheets of Test Examples 25 to 37 were obtained by forming, between the transparent electrode layers 24 and 25, a coating film containing a liquid crystal compound LCM, a dichroic dye DP, a reactive mesogenic compound, a UV-curable compound, spacers 21S, and a polymerization initiator, and polymerizing the UV-curable compound in the coating film.

Materials (a) to (h) common to the light control sheets of Test Examples 1 to 15 are shown below. Materials (c) to (h) are common to the light control sheets of Test Examples 21 to 37.

(a) Alignment layers 22 and 23: Vertical alignment layer

(b) Transparent electrode layers 24 and 25: Indium tin oxide

(c) Transparent substrates 26 and 27: Polyethylene terephthalate film

(d) Spacers 21S: Spherical particles made of silica

(e) Liquid crystal compound LCM: Fluorine-based liquid crystal compound

(f) Polymerization initiator: Photopolymerization initiator (Irgacure Oxe04: manufactured by BASF)

(g) Polymerizable composition: a mixture of isobornyl acrylate, pentaerythritol triacrylate and urethane acrylate

(h) Dichroic dye DP: Azo-based compound mixed dye (product name Irgaphor Black X12 DC, manufactured by BASF)

[Test Example 1]

The formulation ratios of Materials (e) to (h) relative to the coating liquid for forming a light control sheet of Test Example 1 are shown below.
(e) Liquid crystal compound LCM: 46 mass%

(f) Polymerization initiator: 1 mass%

(g) Polymerizable composition: 49 mass%

(h) Dichroic dye DP: 2 mass%

A coating liquid of Test Example 1 was applied to the first alignment layer 22 so that black spacers 21S having a particle size of 7 $\mu$m were arranged on the first alignment layer 22 to thereby form a coating film of Test Example 1. Next, with the coating film of Test Example 1 sandwiched between the first alignment layer 22 and the second alignment layer 23, the first transparent substrate 26 was irradiated with 365-nm UV light to thereby form a light control sheet of Test Example 1 including a light control layer 21 having a thickness of 7 $\mu$m. The UV dose was set to 1,380 mJ/cm$^2$.

[Test Example 2]

A light control sheet of Test Example 2 was obtained by the same production method as in Test Example 1.

[Test Example 3]

A light control sheet of Test Example 3 including a light control layer 21 having a thickness of 8 $\mu$m was

obtained by the same production method as in Test Example 1 except that the particle size of the spacers 21S was changed to 8 $\mu$m and the UV dose was changed to 780 mJ/cm$^2$ using the coating liquid of Test Example 1.

[Test Example 4]

A light control sheet of Test Example 4 was obtained by the same production method as in Test Example 3.

[Test Example 5]

The formulation ratios of Materials (e) to (h) relative to the coating liquid for forming a light control sheet of Test Example 5 are shown below.
(e) Liquid crystal compound LCM: 50 mass%

(f) Polymerization initiator: 1 mass%

(g) Polymerizable composition: 45 mass%

(h) Dichroic dye DP: 2 mass%

A coating liquid of Test Example 5 was applied to the first alignment layer 22 so that black spacers 21S having a particle size of 8 $\mu$m were arranged on the first alignment layer 22 to thereby form a coating film of Test Example 5. Next, with the coating film of Test Example 5 sandwiched between the first alignment layer 22 and the second alignment layer 23, the first transparent substrate 26 was irradiated with 365-nm UV light to thereby form a light control sheet of Test Example 5 including a light control layer 21 having a thickness of 8 $\mu$m. The UV dose was set to 810 mJ/cm$^2$.

[Test Example 6]

A light control sheet of Test Example 6 was obtained by the same production method as in Test Example 5.

[Test Example 7]

A light control sheet of Test Example 7 including a light control layer 21 having a thickness of 8 $\mu$m was obtained by the same production method as in Test Example 1 except that the particle size of the spacers 21S was changed to 8 $\mu$m and the UV dose was changed to 920 mJ/cm$^2$ using the coating liquid of Test Example 1.

[Test Example 8]

A light control sheet of Test Example 8 including a light control layer 21 having a thickness of 8 $\mu$m was obtained by the same production method as in Test Example 1 except that the particle size of the spacers 21S was changed to 8 $\mu$m and the UV dose was changed to 1,380 mJ/cm$^2$ using the coating liquid of Test Example 1.

[Test Example 9]

A light control sheet of Test Example 9 including a light control layer 21 having a thickness of 8 $\mu$m was obtained by the same production method as in Test Example 5 except that the UV dose was changed to 840 mJ/cm$^2$ using the coating liquid of Test Example 5.

[Test Example 10]

A light control sheet of Test Example 10 including a light control layer 21 having a thickness of 8 $\mu$m was obtained by the same production method as in Test Example 5 except that the UV dose was changed to 800 mJ/cm$^2$ using the coating liquid of Test Example 5.

[Test Example 11]

The light control sheet of Test Example 2 was laminated and bonded to the light control sheet of Test Example 1 to thereby obtain a light control device 10 of Test Example 11. The light control sheet of Test Example 2 was bonded to the light control sheet of Test Example 1 using an optical clear adhesive.

[Test Example 12]

The light control sheet of Test Example 4 was laminated and bonded to the light control sheet of Test Example 3 to thereby obtain a light control device 10 of Test Example 12. The light control sheet of Test Example 4 was bonded to the light control sheet of Test Example 3 using an optical clear adhesive.

[Test Example 13]

The light control sheet of Test Example 6 was laminated and bonded to the light control sheet of Test Example 5 to thereby obtain a light control device 10 of Test Example 13. The light control sheet of Test Example 6 was bonded to the light control sheet of Test Example 5 using an optical clear adhesive.

[Test Example 14]

The light control sheet of Test Example 8 was laminated and bonded to the light control sheet of Test Example 7 to thereby obtain a light control device 10 of Test Example 14. The light control sheet of Test Example 8 was bonded to the light control sheet of Test Example 7 using an optical clear adhesive.

[Test Example 15]

The light control sheet of Test Example 10 was laminated and bonded to the light control sheet of Test Example 9 to thereby obtain a light control device 10 of Test Example 15. The light control sheet of Test Example 10 was bonded to the light control sheet of Test Example 9 using an optical clear adhesive.

[Test Example 21]

The formulation ratios of Materials (e) to (h) relative to the coating liquid for forming a light control sheet of Test Example 21 are shown below.
(e) Liquid crystal compound LCM: 55 mass%

(f) Polymerization initiator: 1 mass%

(g) Polymerizable composition: 40 mass%

(h) Dichroic dye DP: 2.2 mass%

A coating liquid of Test Example 21 was applied to the first alignment layer 22 so that black spacers 21S having a particle size of 15 $\mu$m were arranged on the first alignment layer 22 to thereby form a coating film of Test Example 21. Next, with the coating film of Test Example 21 sandwiched between the first alignment layer 22 and the second alignment layer 23, the first transparent substrate 26 was irradiated with 365-nm UV light to thereby form a light control sheet of Test Example 21 including a light control layer 21 having a thickness of 15 $\mu$m. The UV dose was set to 1,200 mJ/cm$^2$.

[Test Example 22]

A light control sheet of Test Example 22 including a light control layer 21 having a thickness of 15 $\mu$m was obtained by the same production method as in Test Example 21 except that the alignment layers 22 and 23 were subjected to a rubbing treatment.

[Test Example 23]

A light control sheet of Test Example 23 including a light control layer 21 having a thickness of 15 $\mu$m was obtained by the same production method as in Test Example 21.

[Test Example 24]

A light control sheet of Test Example 24 including a light control layer 21 having a thickness of 15 $\mu$m was obtained by the same production method as in Test Example 22.

[Test Example 25]

The formulation ratios of Materials (e) to (h) relative to the coating liquid for forming a light control sheet of Test Example 25 are shown below.

(e) Liquid crystal compound LCM: 55 mass%

(f) Polymerization initiator: 1 mass%

(g) Polymerizable composition: 39 mass%

(h) Dichroic dye DP: 3.0 mass%

A coating liquid of Test Example 25 was applied to the first transparent electrode layer 24 so that black spacers 21S having a particle size of 15 $\mu$m were arranged on the first transparent electrode layer 24 to thereby form a coating film of Test Example 25. Next, with the coating film of Test Example 25 sandwiched between the first transparent electrode layer 24 and the second transparent electrode layer 25, the first transparent substrate 26 was irradiated with 365-nm UV light to thereby form a light control sheet of Test Example 21 including a light control layer 21 having a thickness of 15 $\mu$m. The UV dose was set to 1,500 mJ/cm$^2$.

[Test Example 26] to [Test Example 29]

Light control sheets of Test Examples 26 to 29 including a light control layer 21 having a thickness of 15 $\mu$m were obtained by the same production method as in Test Example 25.

[Test Example 30] and [Test Example 31]

Light control sheets of Test Examples 30 and 31 including a light control layer 21 having a thickness of 15 $\mu$m were obtained by the same production method as in Test Example 25 except that the formulation ratio of the dichroic dye DP was changed to 4.0 mass% and the polymerizable composition was changed to 38 mass%.

[Test Example 32] to [Test Example 37]

Light control sheets of Test Examples 32 to 37 including a light control layer 21 having a thickness of 15 $\mu$m were obtained by the same production method as in Test Example 25 except that the formulation ratio of the dichroic dye DP was changed to 5.0 mass% and the polymerizable composition was changed to 37 mass%.

[Evaluation Method]

For the light control devices 10 of Test Examples 1 to 10 and 21 to 37, the total light transmittance, diffuse transmittance, parallel light transmittance, haze and clarity were measured by a measurement method in accordance with ASTM D 1003-00.

For the light control devices 10 of Test Examples 11 to 15, the total light transmittance, diffuse transmittance, parallel light transmittance, haze and clarity were measured by a measurement method in accordance with ASTM D 1003-00.

In measurement of the optical properties, an AC voltage of 40 V square wave with a frequency of 50Hz was used as a drive signal for the light control sheet. Further, a haze meter (BYK haze-gard i indtrument: manufactured by BYK Gardner) was used to measure the optical properties.

For the light control devices 10 of Test Examples 1 to 10 and 21 to 37, the absorbance to visible light of 380 nm or greater and 780 nm or less was measured by a measurement method in accordance with JIS K 0115:2004. For the light control devices 10 of Test Examples 11 to 15, the absorbance to visible light of 380 nm or greater and 780 nm or less was measured by a measurement method in accordance with JIS K 0115:2004.

For the liquid crystal composition 21LC included in the light control sheets of Test Examples 1 to 37, the horizontal absorbance, which is the absorbance in the horizontal alignment for visible light of 380 nm or greater and 780 nm or less, and the average absorbance were measured by a measurement method in accordance with JIS K 0115:2004. The average absorbance was the average value of the absorbance of the liquid crystal composition 21LC when horizontally aligned and the absorbance of the liquid crystal composition 21LC when vertically aligned. The absorbance of the liquid crystal composition 21LC was obtained by placing the liquid crystal composition 21LC containing the dichroic dye DP in each of a cell for horizontal alignment having a thickness of 6 μm and a cell for vertical alignment having a thickness of 6 μm.

For the light control devices 10 of Test Examples 1 to 10 and 21 to 37, the average absorbance difference was calculated by subtracting the average absorbance of the liquid crystal composition 21LC from the absorbance in the opaque state. For the light control devices 10 of Test Examples 11 to 15, the average absorbance difference was calculated by subtracting the average absorbance of the liquid crystal composition 21LC from the absorbance of the light control device 10 in the opaque state.

For the light control devices 10 of Test Examples 1 to 10 and 21 to 37, the horizontal absorbance difference was calculated by subtracting the horizontal absorbance of the liquid crystal composition 21LC from the absorbance in the opaque state. For the light control devices 10 of Test Examples 11 to 15, the horizontal absorbance difference was calculated by subtracting the horizontal absorbance of the liquid crystal composition 21LC from the absorbance of the light control device 10 in the opaque state.

For the light control devices 10 of Test Examples 1 to 15 and 21 to 37, the contrast was calculated as the ratio of the total light transmittance of the light control device 10 in the light state (transparent state) to the total light transmittance in the dark state (opaque state). For the light control devices 10 of Test Examples 11 to 15, the ratio of the increase ratio was calculated as the ratio of the contrast of the light control device 10 to the sum of the contrasts of the two light control sheets constituting the light control device 10.

[Evaluation Results]

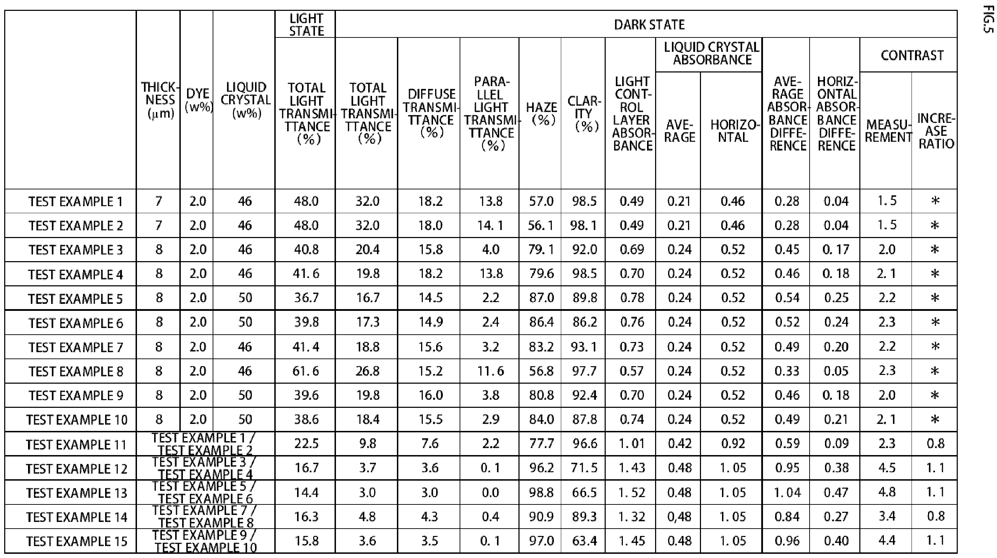

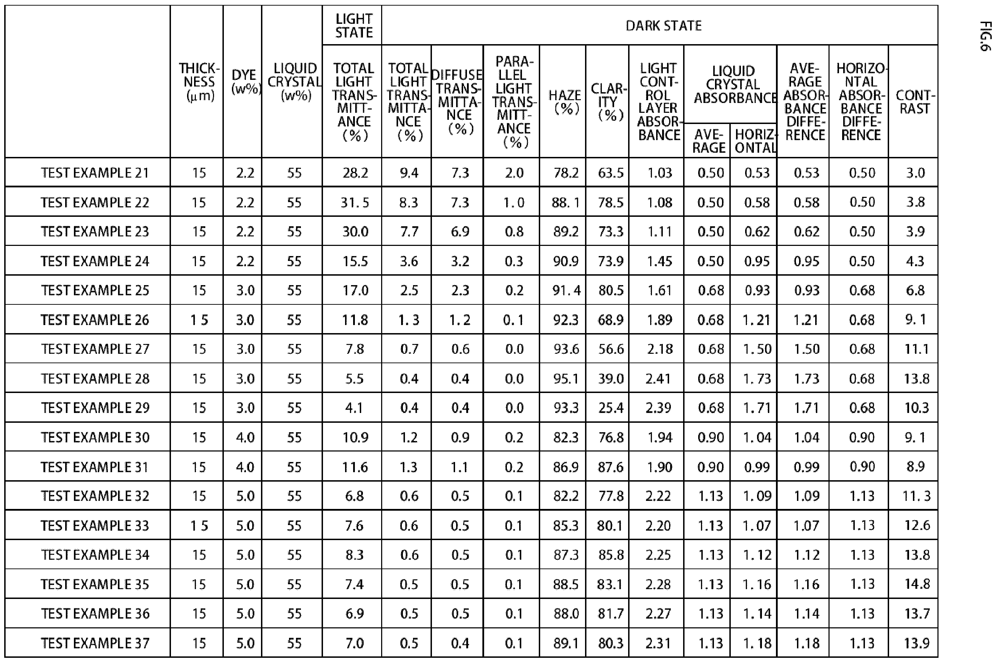

Figs. 5 and 6 show the results of evaluating the light control devices 10 of Test Examples 1 to 37 together with the configurations of the respective test examples.

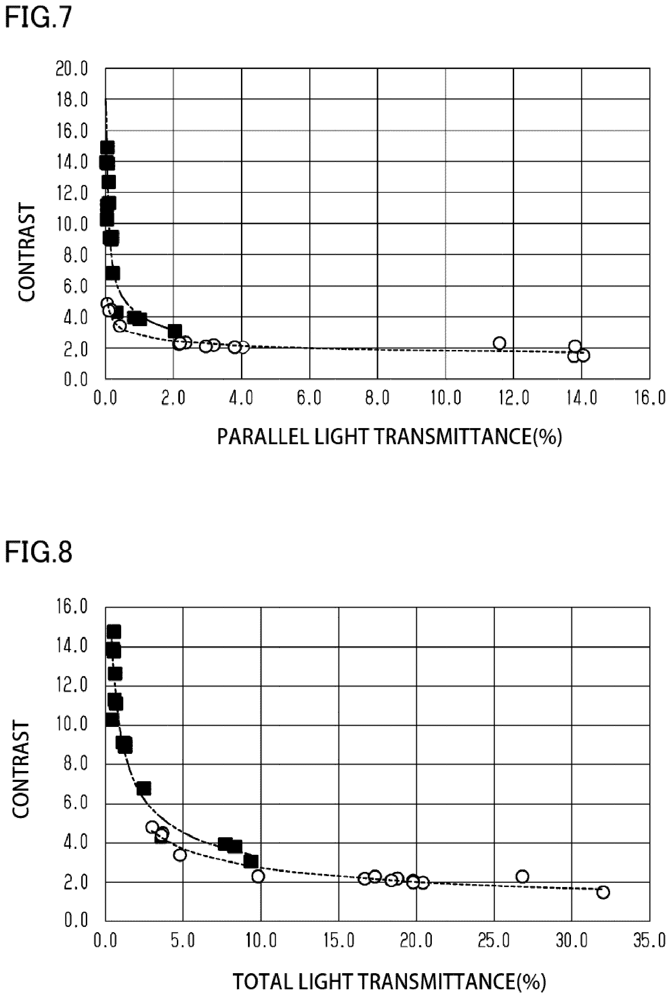

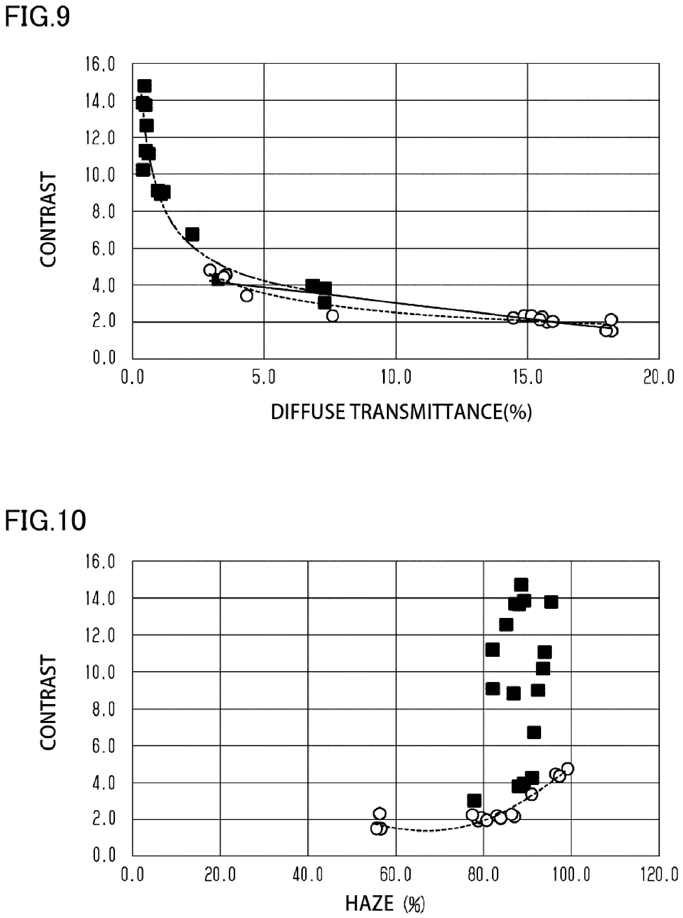

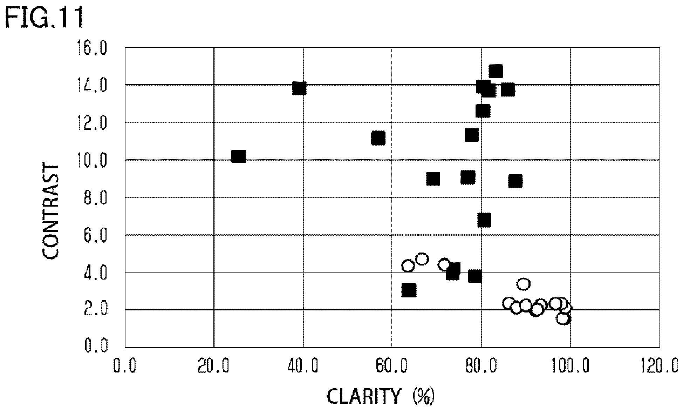

Fig. 7 shows the relationship between parallel light transmittance and contrast in each test example. Fig. 8 shows the relationship between total light transmittance and contrast in each test example. Fig. 9 shows the relationship between diffuse transmittance and contrast in each test example. Fig. 10 shows the relationship between haze and contrast in each test example. Fig. 11 shows the relationship between clarity and contrast in each test example. In Figs. 7 to 11, the evaluation results for the light control devices 10 having a reverse type light control sheet are indicated by open circles. In Figs. 7 to 11, the evaluation results for the light control devices 10 having a normal type light control sheet are indicated by black squares.

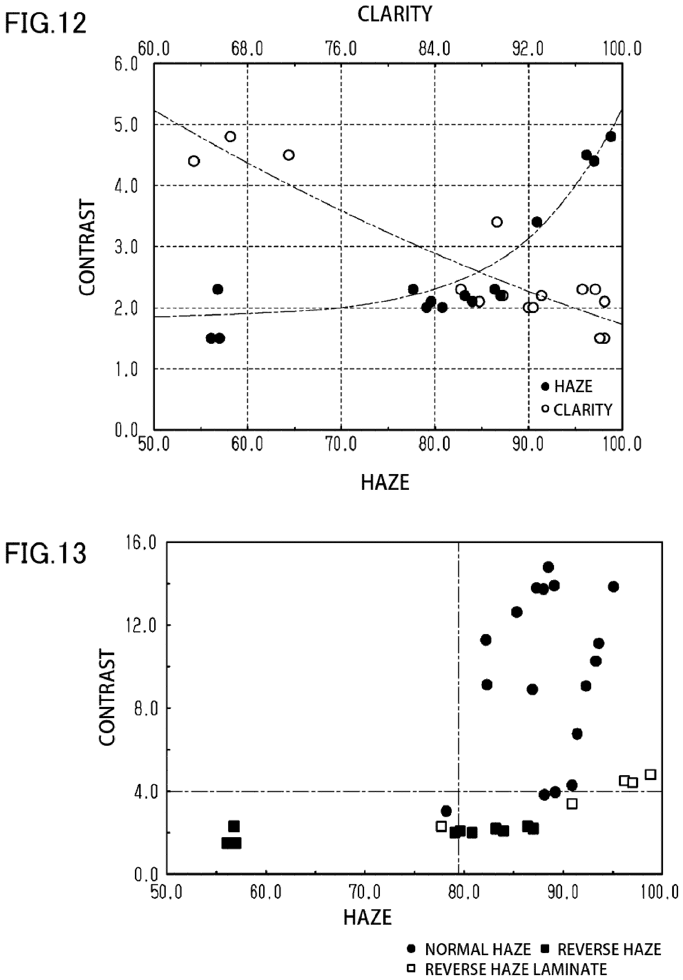

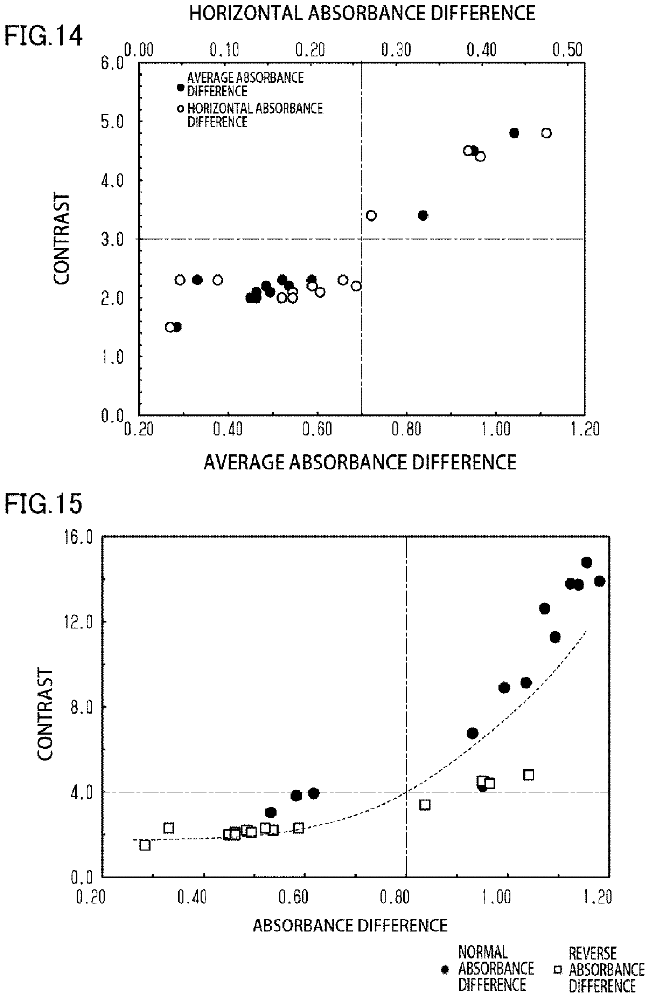

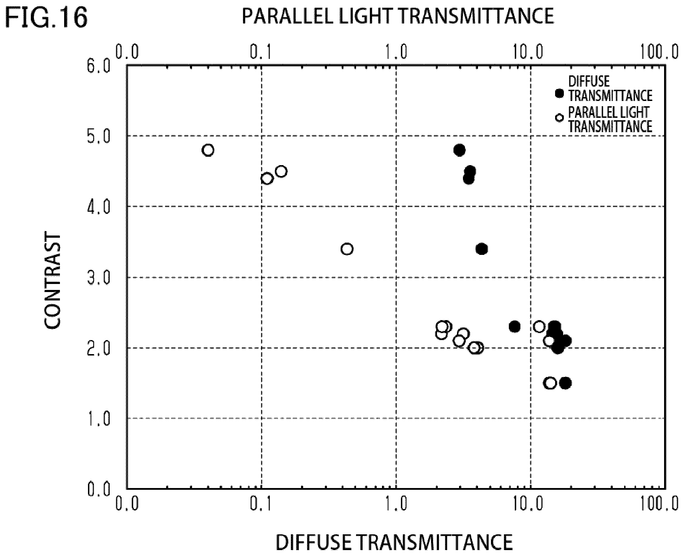

Fig. 12 is a graph showing the relationship between haze and clarity and the relationship between clarity and contrast in Test Examples 1 to 15. Fig. 13 is a graph showing the relationship between haze and contrast in Test Examples 1 to 37. Fig. 14 is a graph showing the relationship between average absorbance difference and contrast in Test Examples 1 to 15 and 21 to 37. Fig. 16 is a graph showing the relationship between parallel light transmittance and contrast and the relationship between diffuse transmittance and contrast in Test Examples 1 to 15.

As shown in Fig. 5, in all of Test Examples 1 to 10, the total light transmittance of the light control device 10 in the light state was 30% or greater and 65% or less. On the other hand, in all of Test Examples 11 to 15, the total light transmittance of the light control device 10 in the light state was 14% or greater and 25% or less. In particular, in all of Test Examples 12 to 15, the total light transmittance of the light control device 10 in the light state was 14% or greater and 20% or less.

In all of Test Examples 1 to 11, the total light transmittance of the light control device 10 in the dark state was 9.8% or greater and 32% or less. In both of Test Examples 1 and 2, the total light transmittance of the light control device 10 in the dark state was 32%. On the other hand, in all of Test Examples 3 to 8, 10 and 11, the total light transmittance of the light control device 10 in the dark state was 9% or greater and 25% or less. On the other hand, in all of Test Examples 12 to 15, the total light transmittance of the light control device 10 in the dark state was 3% or greater and 7% or less.

In all of Test Examples 1 to 11, the diffuse transmittance of the light control device 10 in the dark state exceeded 6%. In both of Test Examples 1 and 2, the diffuse transmittance of the light control device 10 in the dark state exceeded 18%. On the other hand, in all of Test Examples 3 and 5 to 11, the diffuse transmittance of the light control device 10 in the dark state was 3% or greater and 16% or less. Meanwhile, in all of Test Examples 12 to 15, the diffuse transmittance of the light control device 10 in the dark state was 3% or greater and 6% or less.

In all of Test Examples 1 to 11, the parallel light transmittance of the light control device 10 in the dark state was 2.2% or greater and 15% or less. In both of Test Examples 1 and 2, the parallel light transmittance of the light control device 10 in the dark state exceeded 13%. On the other hand, in all of Test Examples 3, 5, 6, 7 and 9 to 11, the parallel light transmittance of the light control device 10 in the dark state was greater than 2% and 5% or less. Meanwhile, in all of Test Examples 12 to 15, the parallel light transmittance of the light control device 10 in the dark state was 0% or greater and 2% or less.

In all of Test Examples 1 to 11, the haze of the light control device 10 in the dark state was 55% or greater and 87% or less. In both of Test Examples 1 and 2, the haze of the light control device 10 in the dark state was lower than 60%. On the other hand, in all of Test Examples 3 to 7, 9 and 10, the haze of the light control device 10 in the dark state was 79% or greater and 87% or less. Meanwhile, in all of Test Examples 12 to 15, the haze of the light control device 10 in the dark state was 90% or greater and 99% or less. Further, in all of Test Examples 12, 13 and 15, the haze of the light control device 10 in the dark state was 96% or greater and 99% or less.

In all of Test Examples 1 to 11, the clarity of the light control device 10 in the dark state was 86% or greater and 99% or less. In both of Test Examples 1 and 2, the clarity of the light control device 10 in the dark state exceeded 98%. On the other hand, in all of Test Examples 3, 5, 6, 7, 9 and 10, the clarity of the light control device 10 in the dark state was 86 % or greater and 95% or less. Meanwhile, in all of Test Examples 12 to 15, the clarity of the light control device 10 in the dark state was 63% or greater and 90% or less. Further, in all of Test Examples 12, 13 and 15, the clarity of the light control device 10 in the dark state was 63% or greater and 72% or less.

In all of Test Examples 1 to 11, the average absorbance difference of the light control device 10 in the dark state was lower than 0.6%. In both of Test Examples 1 and 2, the horizontal absorbance difference of the light control device 10 in the dark state was 0.28. On the other hand, in all of Test Examples 3 to 8 and 9 to 11, the average absorbance difference of the light control device 10 in the dark state was 0.4 or greater and 0.6 or less. Meanwhile, in all of Test Examples 12 to 15, the average absorbance difference of the light control device 10 in the dark state was 0.8% or greater and 1.05% or less. Further, in all of Test Example 12, 13 and 15, the average absorbance difference of the light control device 10 in the dark state was 0.9% or greater and 1.05% or less.

In all of Test Examples 1 to 11, the horizontal absorbance difference of the light control device 10 in the dark state was lower than 0.3%. In both of Test Examples 1 and 2, the horizontal absorbance difference of the light control device 10 in the dark state was 0.04. On the other hand, in all of Test Examples 3 to 7 and 9 to 11, the horizontal absorbance difference of the light control device 10 in the dark state was 0.1 or greater. Meanwhile, in all of Test Examples 12, 13 and 15, the horizontal absorbance difference of the light control device 10 in the dark state was 0.2% or greater and 0.5% or less.

In all of Test Examples 1 to 11, the contrast of the light control device 10 was 1.5 or greater and 2.3 or less. In both of Test Examples 1 and 2, the contrast of the light control device 10 in the dark state was 1.5. In all of Test Examples 3 to 11, the contrast of the light control device 10 in the dark state was 2.0 or greater and 2.3 or less. On the other hand, in all of Test Examples 12 to 15, the contrast of the light control device 10 was 3.4 or greater and 4.5 or less.

As shown in Fig. 6, in all of Test Examples 21 to 37, the total light transmittance of the light control device 10 in the light state was 4% or greater and 32% or less.

In all of Test Examples 21 to 23, the total light transmittance of the light control device 10 in the dark state was 7% or greater and 10% or less. On the other hand, in all of Test Examples 24 to 37, the total light transmittance of the light control device 10 in the dark state was 0.4% or greater and 3.6% or less.

In all of Test Examples 21 to 23, the diffuse transmittance of the light control device 10 in the dark state was 6.9% or greater. On the other hand, in all of Test Examples 24 to 37, the diffuse transmittance of the light control device 10 in the dark state was 6% or less, and 0.4% or greater and 3.2% or less. Further, in all of Test Examples 27 to 30 and 32 to 37, the diffuse transmittance of the light control device 10 in the dark state was 0.4% or greater and 0.9% or less.

In Test Example 21, the parallel light transmittance of the light control device 10 in the dark state was 2%. On the other hand, in all of Test Examples 22 to 37, the parallel light transmittance of the light control device 10 in the dark state was 0.0% or greater and 1.0% or less. Further, in all of Test Examples 23 to 37, the parallel light transmittance of the light control device 10 in the dark state was 0.0% or greater and less than 1.0%. In particular, in all of Test Examples 23 to 25, 30 and 31, the parallel light transmittance of the light control device 10 in the dark state was 0.2% or greater, and in all of Test Examples 26 to 29 and 32 to 37, the parallel light transmittance of the light control device 10 in the dark state was 0.0% or greater and 0.1% or less.

In all of Test Examples 21 to 37, the haze of the light control device 10 in the dark state was 78% or greater and 96% or less. In all of Test Examples 21 to 37, the clarity of the light control device 10 in the dark state was 25% or greater and 88% or less.

In all of Test Examples 21 to 24, the contrast of the light control device 10 was 3 or greater and less than 5. In all of Test Examples 25, 26, 30 and 31, the contrast of the light control device 10 was 5 or greater and less than 10. In all of Test Examples 27 to 29 and 32 to 37, the contrast of the light control device 10 was 10 or greater and less than 15.

As shown in Fig. 7, in the light control device 10 having a reverse type light control sheet, the contrast, which is the ratio of the total light transmittance in the light state to the total light transmittance in the dark state, was significantly increased when the parallel light transmittance was 2% or less, compared to when the parallel light transmittance exceeded 2%. That is, the contrast is found to be significantly increased when the light control device 10 in the dark state has the parallel light transmittance of 2% or less.

In the light control device 10 having a normal type light control sheet, the contrast was steeply increased when the parallel light transmittance was 1% or less, compared to when the parallel light transmittance exceeded 1%. Further, the contrast exceeded 5 when the parallel light transmittance was 0.2% or less. Furthermore, contrast exceeded 10 when the parallel light transmittance was 0.1% or less. That is, when it is required to increase the contrast in a normal type light control device 10, the parallel light transmittance is preferably 1% or less, more preferably 0.2% or less, and still more preferably 0.1% or less.

As shown in Fig. 8, in the light control device 10 having a reverse type light control sheet, the contrast was significantly increased when the total light transmittance was 10% or less, in particular 7% or less. That is, in the light control device 10 having a reverse type light control sheet, the contrast can be significantly increased when the total light transmittance in the dark state is 7% or less.

In the light control device 10 having a normal type light control sheet, the contrast was steeply increased when the total light transmittance was 3.6% or less. Further, in the light control device 10 having a normal type light control sheet, the contrast was further increased when the total light transmittance was 2.5% or less, and the contrast was still further increased when the total light transmittance was 0.7% or less. That is, when it is required to increase the contrast in the light control device 10 having a normal type light control sheet, the total light transmittance is preferably 3.6% or less, more preferably 2.5% or less, and still more preferably 0.7% or less.

As shown in Fig. 9, in the light control device 10 having a reverse type light control sheet, the contrast was significantly increased when the diffuse transmittance was less than 7%, in particular 6% or less. That is, in the light control device 10 having a reverse type light control sheet, the contrast can be significantly increased when the total light transmittance in the dark state is 6% or less.

In the light control device 10 having a normal type light control sheet, the contrast was significantly increased when the diffuse transmittance was 3.2% or less. Further, in the light control device 10 having a normal type light control sheet, the contrast was further increased when the diffuse transmittance was 2.3% or less, and the contrast was still further increased when the diffuse transmittance was 0.6% or less. That is, when it is required to increase the contrast in the light control device 10 having a normal type light control sheet, the diffuse transmittance is preferably 3.2% or less, more preferably 2.3% or less, and still more preferably 0.6% or less.

As shown in Fig. 10, in the light control device 10 having a reverse type light control sheet, the contrast was increased with an increase in haze when the haze was 80% or greater. In the light control device 10 having a reverse type light control sheet, the contrast was particularly increased when the haze was 96% or greater.

As shown in Fig. 11, in the light control device 10 having a reverse type light control sheet, the contrast was increased when the clarity was 80% or less, compared to when the clarity exceeded 80%.

As shown in Figs. 5 and 12, the evaluation results of Test Examples 1 to 10 show that the contrast of the light control sheet was 2.3 or less when the haze of one light control sheet was 56% or greater and 87% or less. Further, the evaluation results of Test Example 11 show that, in the light control device 10 having two laminated light control sheets, the contrast was 2.3 or less when the haze of one light control sheet was 50% or greater and less than 79%.

On the other hand, the evaluation results of Test Examples 12 to 15 show that, in the light control device 10 having two laminated light control sheets, the contrast was steeply increased when the haze of one light control sheet was 79% or greater. Further, the evaluation results of Test Examples 11 to 15 show that, in the light control device 10 having two laminated light control sheets, the contrast increase ratio was 1 or greater when the hazes of the two light control sheets were both 79% or greater.

The evaluation results of Test Examples 1 to 10 show that the contrast of the light control sheet was 2.3 or less when one light control sheet had the clarity of 86% or greater and 99% or less. Further, the evaluation results of Test Examples 11 to 15 show that, in the light control device 10 having two laminated light control sheets, in which one light control sheet had the clarity of 95%±3%, the contrast of the light control sheet was greatly different. That is, no strong correlation was found between the clarity of one light control sheet and the light control device 10 exhibiting high contrast.

As shown in Figs. 5, 6 and 13, the evaluation results of Test Examples 21 to 37 show that the contrast was approximately 3 as with the case of one reverse type light control sheet, when the haze of the light control sheet was less than 79%. On the other hand, the evaluation results of Test Examples 21 to 37 show that the contrast was steeply increased and a high contrast of approximately 4 or greater was obtained as if two reverse type light control sheets were laminated, when the haze of the light control sheet was 79% or greater.

As shown in Figs. 5 and 14, the evaluation results of Test Examples 1 to 10 show that the contrast of the light control sheet was 2.3 or less when the average absorbance difference of one light control sheet was 0.28 or greater and 0.54 or less. The evaluation results of Test Examples 1 to 10 show that the contrast of the light control sheet was 2.3 or less when the horizontal absorbance difference of one light control sheet was 0.04 or greater and 0.25 or less.

The evaluation results of Test Example 11 show that, in the light control device 10 having two laminated light control sheets, the contrast was 2.3 or less when the average absorbance difference of one light control sheet was less than 0.4. The evaluation results of Test Example 11 show that, in the light control device 10 having two laminated light control sheets, the contrast was 2.3 or less when the horizontal absorbance difference of one light control sheet was less than 0.1.

On the other hand, as shown in Fig. 5, the evaluation results of Test Examples 12 to 15 show that, in the light control device 10 having two laminated light control sheets, the contrast was steeply increased when the average absorbance difference of one light control sheet was 0.4 or greater. The evaluation results of Test Examples 12 to 15 show that, in the light control device 10 having two laminated light control sheets, the contrast was steeply increased when the horizontal absorbance difference of one light control sheet was 0.1 or greater.

Further, the evaluation results of Test Examples 11 to 15 show that, in the light control device 10 having two laminated light control sheets, the contrast increase ratio was 1 or greater when the average absorbances of the two light control sheets were both 0.4 or greater. The evaluation results of Test Examples 11 to 15 show that, in the light control device 10 having two laminated light control sheets, the contrast increase ratio was 1 or greater when the horizontal absorbances of the two light control sheets were both 0.1 or greater.

As shown in Figs. 5, 6, 14 and 15, the evaluation results of Test Examples 1 to 37 show that the contrast was approximately 3 when the average absorbance difference in the light control device 10 was less than 0.8. On the other hand, the contrast was steeply increased when the average absorbance difference in the light control device 10 was 0.8 or greater. In addition, the effectiveness of obtaining a high contrast was increased when the average absorbance difference in the light control device 10 was 0.9 or greater. Further, the contrast was less than approximately 3 when the horizontal absorbance difference in the light control device 10 was less than 0.2. On the other hand, the contrast was steeply increased when the horizontal absorbance difference in the light control device 10 was 0.3 or greater.

As shown in Figs. 5, 6 and 16, the evaluation results of Test Examples 1 to 15 show that the contrast was more dependent on the diffuse transmittance than on the parallel light transmittance. That is, it was found that promoting scattering of direct transmitted light in the light control sheet enhanced light absorption by the dichroic dye DP, accelerating the improvement in contrast.

As shown in Fig. 5, in the light control device 10 having two laminated light control sheets, the contrast was increased to 4 or greater when one light control sheet had the haze of 79% or greater and the total light transmittance of 25% or less. In the light control device 10 having two laminated light control sheets, the contrast was increased to 4 or greater when one light control sheet had the average absorbance difference of 0.4 or greater and the total light transmittance of 25% or less.

In the light control device 10 having two laminated light control sheets, the likelihood of the contrast increased to 4 or greater was increased when one light control sheet had the haze of 79% or greater and the diffuse transmittance of 16% or less. In the light control device 10 having two laminated light control sheets, the likelihood of the contrast increased to 4 or greater was increased when one light control sheet had the average absorbance difference of 0.4 or greater and the diffuse transmittance of 16% or less.

In the light control device 10 having two laminated light control sheets, the likelihood of the contrast increased to 4 or greater was increased when one light control sheet had the haze of 79% or greater and the parallel light transmittance of 5% or less. In the light control device 10 having two laminated light control sheets, the likelihood of the contrast increased to 4 or greater was increased when one light control sheet had the average absorbance difference of 0.4 or greater and the parallel light transmittance of 5% or less.

In the light control device 10 having two laminated light control sheets, the likelihood of the contrast increased to 4 or greater was increased when one light control sheet had the haze of 79% or greater and the clarity of 95% or less. In the light control device 10 having two laminated light control sheets, the likelihood of the contrast increased to 4 or greater was increased when one light control sheet had the average absorbance difference of 0.4 or greater and the clarity of 95% or less.

[Absorbance Difference, Absorbance Ratio]

For the light control devices 10 of Test Examples 1 to 10 and 21 to 37, the absorbance to visible light of 380 nm or greater and 780 nm or less in the light state (transparent state) was measured by a measurement method in accordance with JIS K 0115:2004. For the light control devices 10 of Test Examples 11 to 15, the absorbance to visible light of 380 nm or greater and 780 nm or less in the light state was measured by a measurement method in accordance with JIS K 0115:2004.

Using the absorbance of the light control devices 10 of Test Examples 1 to 15 and 21 to 37, a light-dark absorbance difference, which is a value obtained by subtracting an absorbance in the light state (transparent state) from an absorbance in the dark state (opaque state), was calculated for each light control device 10. Further, using the absorbance of the light control device 10 in Test Examples 1 to 15 and 21 to 37, a light-dark absorbance ratio, which is a ratio of an absorbance in the dark state (opaque state) to an absorbance in the light state (transparent state) was calculated.

In Test Examples 1 to 15 and 21 to 37, the light-dark absorbance difference of the light control device 10 was 0.15 or greater and 1.4 or less. In the test examples, the higher the absorbance in the dark state, the higher the light-dark absorbance difference. In the evaluation of the test examples in which the light-dark absorbance difference was 0.15 or greater and less than 0.6, there was a tendency that, as the light-dark absorbance difference increased from 0.15, the contrast increased gradually within the range of 1 or greater and less than 4. That is, in the range where the light-dark absorbance difference was 0.15 or greater and less than 0.6, an increase in contrast was small regardless of the increase in the light-dark absorbance difference.

On the other hand, in the evaluation of the test examples in which the light-dark absorbance difference was 0.6 or greater and 1.4 or less, as the light-dark absorbance difference increased to 0.6 or greater, the contrast was increased steeply within the range of 4 or greater and 15 or less. In particular, when the light-dark absorbance difference exceeded 1.2, an increase in contrast was significant. That is, when the light-dark absorbance difference was 0.6 or greater, the contrast was significantly increased. When it is required to further increase the contrast, the light-dark absorbance difference is preferably 1.2 or greater.

When the light-dark absorbance difference exceeds 1.2, an increase in contrast relative to the light-dark absorbance difference is particularly large. Further, variation in the light-dark absorbance difference in the plane of the light control sheet leads to a large variation in contrast in the plane of the light control sheet. Therefore, when improved contrast and uniform contrast are required, the light-dark absorbance difference is preferably 0.6 or greater and 1.2 or less.

In Test Examples 1 to 15 and 21 to 24, the light-dark absorbance ratio of the light control device 10 was 1.9 or greater and 2.2 or less. In the test examples, the higher the absorbance in the dark state, the higher the light-dark absorbance ratio. In the evaluation of the test examples in which the light-dark absorbance ratio was 1.9 or greater and less than 2.1, there was a tendency that, as the light-dark absorbance ratio increased from 1.9, the contrast increased steeply within the range of 1 or greater and less than 4. On the other hand, in the evaluation of the test examples in which the light-dark absorbance ratio was 2.1 or greater and 2.2 or less, as the light-dark absorbance difference increased to 2.1 or greater, the contrast was increased gradually within the range of 4 or greater and 5 or less. That is, when the light-dark absorbance ratio was 2.1 or greater in the range where the concentration of the dichroic dye DP was 2 mass% or greater and less than 3 mass%, high contrast was stably obtained. In Test Examples 25 to 37, the light-dark absorbance ratio of the light control device 10 was 3.0 or greater and 3.5 or less.

According to the above embodiments, the following effects can be achieved.

(1-1) Regardless of whether it is a light control device 10 of the first example or a light control device 10 of the second example, when the transmittance of the parallel component of total light passing through a reverse type light control sheet is 2% or less, the contrast of the light control device 10 is improved.

(1-2) When the light control device 10 satisfies Condition 1-2, most of the total light passing through the light control device 10 is a diffuse component. This increases the degree of turbidity of the light control device 10 in the opaque state, and blurs images of objects.

(1-3) When the light control device 10 satisfies Condition 1-3, both the parallel component and diffuse component of the total light passing through the light control device 10 are reduced. This further improves the contrast of the light control device 10, and further blurs images of objects.

(1-4) When the light control device 10 satisfies Condition 1-4, the transmittance of the diffuse component of the total light passing through the light control device 10 is particularly reduced. This further increases the contrast of the light control device 10, and deepens the color of the light control device 10.

(1-5) When the transmittance of the parallel component of total light passing through a normal type light control sheet is 1% or less, the contrast of the light control device 10 is improved, and images of objects can be further blurred.

(2-1) Since the haze in the opaque state of each light control sheet constituting the light control device 10 of the second example is 79% or greater, the contrast of the light control device 10 can be greatly improved.

(2-2) Since the average absorbance difference of each light control sheet constituting the light control device 10 of the second example is 0.4 or greater, the contrast of the light control device 10 can be greatly improved.

(2-3) In addition to satisfying Condition 2-1 or Condition 2-2, satisfying at least one of Conditions 2-2 to 2-6 increases the feasibility of obtaining the effects similar to the above (2-1) and (2-2).

(2-4) According to the light control device 10 in which reverse type light control sheets satisfying Condition 2-1 or Condition 2-2 are laminated, a high contrast can be achieved even when the light control device 10 provides a dark state only by an alignment control force from the alignment layers 22 and 23 and/or reactive mesogenic compound.

(3-1) Since the average absorbance difference of the light control device 10 of each example is 0.8 or greater, the contrast of the light control device 10 can be greatly improved.

(3-2) In addition to satisfying Condition 3-1, satisfying at least one of Conditions 3-4 to 3-7 increases the feasibility of obtaining the effects similar to the above (3-1).

(3-3) When one light control device 10 is composed of two or more light control sheets, like the light control device 10 of the second example, even if the absorbance difference of one light control sheet is less than 0.8, the light control device can achieve the absorbance difference of 0.8 or greater by overlapping the two or more light control sheets.

(3-4) The absorbance difference of the light control device 10 can be increased by increasing the volume density of the voids 21D while maintaining the size of the voids 21D or by increasing the size of the voids 21D to the extent that allows for scattering while maintaining the volume density of the voids 21D. When the transparent polymer layer is composed of two or more transparent polymer layers 21P, each transparent polymer layer 21P can be provided with different configurations for achieving the absorbance difference of 0.8 or greater.

(4-1) When the light-dark absorbance difference of the light control device 10 is 0.6 or greater, the contrast of the light control device 10 is significantly improved.

(4-2) When the light-dark absorbance difference of the light control device 10 is 0.6 or greater and 1.2 or less, the contrast in the plane of the light control device 10 is made uniform, in addition to improving the contrast of the light control device 10.

(4-3) When the light-dark absorbance ratio of the light control device 10 is 2.1 or greater, a high contrast in the light control device 10 can be stabilized.

According to the above embodiments, the following technical ideas can be derived.

[Supplementary Note 1]

Alight control device including a light control sheet that is reversibly changeable between a transparent state and an opaque state,

the light control sheet including

a liquid crystal composition containing a liquid crystal compound and a dichroic dye, and

a transparent polymer layer having voids, the voids being filled with the liquid crystal composition, wherein

the light control device is reversibly changeable between transparent and opaque in response to a change in alignment of the liquid crystal compound, and

a light-dark absorbance difference, which is a value obtained by subtracting an absorbance of the light control device in the transparent state from an absorbance of the light control device in the opaque state, is 0.6 or greater.

[Supplementary Note 2]

Alight control device including a light control sheet that is reversibly changeable between a transparent state and an opaque state,

the light control sheet including

a liquid crystal composition containing a liquid crystal compound and a dichroic dye, and

a transparent polymer layer having voids, the voids being filled with the liquid crystal composition, wherein

the light control device is reversibly changeable between transparent and opaque in response to a change in alignment of the liquid crystal compound, and

a light-dark absorbance ratio, which is a ratio of an absorbance of the light control device in the opaque state to an absorbance of the light control device in the transparent state, is 2.1 or greater.

[Reference Signs List]

LCM ... Liquid crystal compound
10 ... Light control device
11 ... Light control sheet

11 UN1 ... First light control unit
11 UN2 ... Second light control unit
21 ... Light control layer
21D ... Void
21L ... Transparent polymer layer
21LC ... Liquid crystal composition
22 ... First alignment layer
23 ... Second alignment layer
24 ... First transparent electrode layer
25 ... Second transparent electrode layer
26 ... First transparent substrate
27 ... Second transparent substrate

**Claims**

1. A light control device comprising two light control sheets that are reversibly changeable between a transparent state and an opaque state,

   one of the light control sheets overlapping the other of the light control sheets, the light control device being configured to have a state in which the light control sheets are simultaneously opaque,
   the light control sheet comprising:

   a transparent polymer layer having voids; and
   a liquid crystal composition containing a liquid crystal compound and a dichroic dye, the voids being filled with the liquid crystal composition, wherein
   an absorbance difference, which is a value obtained by subtracting an average absorbance of the liquid crystal composition from an absorbance of the light control sheets in the opaque state, is 0.4 or greater,
   the average absorbance is an average value of the absorbance of the liquid crystal composition when horizontally aligned and the absorbance of the liquid crystal composition when vertically aligned,
   the absorbance of the liquid crystal composition when horizontally aligned is an absorbance obtained by placing a liquid crystal composition containing the liquid crystal compound and the dichroic dye in a cell for horizontal alignment having a thickness of 6 μm, and
   the absorbance of the liquid crystal composition when vertically aligned is an absorbance obtained by placing a liquid crystal composition containing the liquid crystal compound and the dichroic dye in a cell for vertical alignment having a thickness of 6 μm.

2. A light control device comprising two light control sheets that are reversibly changeable between a transparent state and an opaque state,

   one of the light control sheets overlapping the other of the light control sheets, the light control device being configured to have a state in which the light control sheets are simultaneously opaque,
   the light control sheet comprising:

   a transparent polymer layer having voids; and
   a liquid crystal composition containing a liquid crystal compound and a dichroic dye, the voids being filled with the liquid crystal composition, wherein
   an absorbance difference, which is a value obtained by subtracting a horizontal absorbance of the liquid crystal composition from an absorbance of the light control sheets in the opaque state, is 0.1 or greater,
   the horizontal absorbance is an absorbance of the liquid crystal composition when horizontally aligned, and
   the absorbance of the liquid crystal composition when horizontally aligned is an absorbance obtained by placing a liquid crystal composition containing the liquid crystal compound and the dichroic dye in a cell for horizontal alignment having a thickness of 6 μm.

3. A light control device comprising a light control sheet that is reversibly changeable between a transparent state and an opaque state,
   the light control sheet comprising:

   a liquid crystal composition containing a liquid crystal compound and a dichroic dye; and
   a transparent polymer layer having voids, the voids being filled with the liquid crystal composition,
   the light control sheet being configured to reversibly change from transparent to opaque in response to a change in alignment of the liquid crystal compound, wherein
   an absorbance difference, which is a value obtained by subtracting an average absorbance of the liquid crystal composition from an absorbance of the light control device in the opaque state, is 0.8 or greater,
   the average absorbance is an average value of the absorbance of the liquid crystal composition when horizontally aligned and the absorbance of the liquid crystal composition when vertically aligned,
   the absorbance of the liquid crystal composition when horizontally aligned is an absorbance obtained by placing a liquid crystal composition containing the liquid crystal compound and the dichroic dye in a cell for horizontal alignment having a thickness of 6 μm, and

the absorbance of the liquid crystal composition when vertically aligned is an absorbance obtained by placing a liquid crystal composition containing the liquid crystal compound and the dichroic dye in a cell for vertical alignment having a thickness of 6 μm.

4. The light control device according to any one of claims 1 to 3, wherein
a diffuse transmittance of the light control sheet in the opaque state is 16% or less.

5. The light control device according to any one of claims 1 to 3, wherein
a parallel light transmittance of the light control sheet in the opaque state is 5% or less.

6. The light control device according to any one of claims 1 to 3, wherein
a parallel light transmittance of the light control sheet in the opaque state is 2% or less.

7. The light control device according to any one of claims 1 to 3, wherein
a haze of the light control sheet in the opaque state is 79% or greater.

8. The light control device according to any one of claims 1 to 3, wherein
a total light transmittance of the light control sheet in the opaque state is 25% or less.

9. The light control device according to any one of claims 1 to 3, wherein
a clarity of the light control sheet in the opaque state is 95% or less.

10. The light control device according to any one of claims 1 to 3, wherein
the light control sheet includes:

a first transparent electrode layer;
a second transparent electrode layer;
a first alignment layer disposed between the first transparent electrode layer and the transparent polymer layer; and
a second alignment layer disposed between the second transparent electrode layer and the transparent polymer layer, and
a light control layer including the transparent polymer layer and the liquid crystal composition has a thickness of 10 μm or less.

FIG.1

FIG.2

FIG.3

FIG.4

FIG.5

EP 4 509 908 A1

| | THICK-NESS (μm) | DYE (w%) | LIQUID CRYSTAL (w%) | LIGHT STATE TOTAL LIGHT TRANSMITTANCE (%) | DARK STATE TOTAL LIGHT TRANSMITTANCE (%) | DIFFUSE TRANSMITTANCE (%) | PARALLEL LIGHT TRANSMITTANCE (%) | HAZE (%) | CLARITY (%) | LIGHT CONTROL LAYER ABSORBANCE | LIQUID CRYSTAL ABSORBANCE AVERAGE | LIQUID CRYSTAL ABSORBANCE HORIZONTAL | AVERAGE ABSORBANCE DIFFERENCE | HORIZONTAL ABSORBANCE DIFFERENCE | CONTRAST MEASUREMENT | CONTRAST INCREASE RATIO |
|---|---|---|---|---|---|---|---|---|---|---|---|---|---|---|---|---|
| TEST EXAMPLE 1 | 7 | 2.0 | 46 | 48.0 | 32.0 | 18.2 | 13.8 | 57.0 | 98.5 | 0.49 | 0.21 | 0.46 | 0.28 | 0.04 | 1.5 | * |
| TEST EXAMPLE 2 | 7 | 2.0 | 46 | 48.0 | 32.0 | 18.0 | 14.1 | 56.1 | 98.1 | 0.49 | 0.21 | 0.46 | 0.28 | 0.04 | 1.5 | * |
| TEST EXAMPLE 3 | 8 | 2.0 | 46 | 40.8 | 20.4 | 15.8 | 4.0 | 79.1 | 92.0 | 0.69 | 0.24 | 0.52 | 0.45 | 0.17 | 2.0 | * |
| TEST EXAMPLE 4 | 8 | 2.0 | 46 | 41.6 | 19.8 | 18.2 | 13.8 | 79.6 | 98.5 | 0.70 | 0.24 | 0.52 | 0.46 | 0.18 | 2.1 | * |
| TEST EXAMPLE 5 | 8 | 2.0 | 50 | 36.7 | 16.7 | 14.5 | 2.2 | 87.0 | 89.8 | 0.78 | 0.24 | 0.52 | 0.54 | 0.25 | 2.2 | * |
| TEST EXAMPLE 6 | 8 | 2.0 | 50 | 39.8 | 17.3 | 14.9 | 2.4 | 86.4 | 86.2 | 0.76 | 0.24 | 0.52 | 0.52 | 0.24 | 2.3 | * |
| TEST EXAMPLE 7 | 8 | 2.0 | 46 | 41.4 | 18.8 | 15.6 | 3.2 | 83.2 | 93.1 | 0.73 | 0.24 | 0.52 | 0.49 | 0.20 | 2.2 | * |
| TEST EXAMPLE 8 | 8 | 2.0 | 46 | 61.6 | 26.8 | 15.2 | 11.6 | 56.8 | 97.7 | 0.57 | 0.24 | 0.52 | 0.33 | 0.05 | 2.3 | * |
| TEST EXAMPLE 9 | 8 | 2.0 | 50 | 39.6 | 19.8 | 16.0 | 3.8 | 80.8 | 92.4 | 0.70 | 0.24 | 0.52 | 0.46 | 0.18 | 2.0 | * |
| TEST EXAMPLE 10 | 8 | 2.0 | 50 | 38.6 | 18.4 | 15.5 | 2.9 | 84.0 | 87.8 | 0.74 | 0.24 | 0.52 | 0.49 | 0.21 | 2.1 | * |
| TEST EXAMPLE 11 | TEST EXAMPLE 1 / TEST EXAMPLE 2 | | | 22.5 | 9.8 | 7.6 | 2.2 | 77.7 | 96.6 | 1.01 | 0.42 | 0.92 | 0.59 | 0.09 | 2.3 | 0.8 |
| TEST EXAMPLE 12 | TEST EXAMPLE 3 / TEST EXAMPLE 4 | | | 16.7 | 3.7 | 3.6 | 0.1 | 96.2 | 71.5 | 1.43 | 0.48 | 1.05 | 0.95 | 0.38 | 4.5 | 1.1 |
| TEST EXAMPLE 13 | TEST EXAMPLE 5 / TEST EXAMPLE 6 | | | 14.4 | 3.0 | 3.0 | 0.0 | 98.8 | 66.5 | 1.52 | 0.48 | 1.05 | 1.04 | 0.47 | 4.8 | 1.1 |
| TEST EXAMPLE 14 | TEST EXAMPLE 7 / TEST EXAMPLE 8 | | | 16.3 | 4.8 | 4.3 | 0.4 | 90.9 | 89.3 | 1.32 | 0,48 | 1.05 | 0.84 | 0.27 | 3.4 | 0.8 |
| TEST EXAMPLE 15 | TEST EXAMPLE 9 / TEST EXAMPLE 10 | | | 15.8 | 3.6 | 3.5 | 0.1 | 97.0 | 63.4 | 1.45 | 0.48 | 1.05 | 0.96 | 0.40 | 4.4 | 1.1 |

FIG.6

| | THICKNESS (µm) | DYE (w%) | LIQUID CRYSTAL (w%) | LIGHT STATE TOTAL LIGHT TRANSMITTANCE (%) | DARK STATE | | | | | | | | | | |
|---|---|---|---|---|---|---|---|---|---|---|---|---|---|---|---|
| | | | | | TOTAL LIGHT TRANSMITTANCE (%) | DIFFUSE TRANSMITTANCE (%) | PARALLEL LIGHT TRANSMITTANCE (%) | HAZE (%) | CLARITY (%) | LIGHT CONTROL LAYER ABSORBANCE | LIQUID CRYSTAL ABSORBANCE | | AVERAGE ABSORBANCE DIFFERENCE | HORIZONTAL ABSORBANCE DIFFERENCE | CONTRAST |
| | | | | | | | | | | | AVERAGE | HORIZONTAL | | | |
| TEST EXAMPLE 21 | 15 | 2.2 | 55 | 28.2 | 9.4 | 7.3 | 2.0 | 78.2 | 63.5 | 1.03 | 0.50 | 0.53 | 0.53 | 0.50 | 3.0 |
| TEST EXAMPLE 22 | 15 | 2.2 | 55 | 31.5 | 8.3 | 7.3 | 1.0 | 88.1 | 78.5 | 1.08 | 0.50 | 0.58 | 0.58 | 0.50 | 3.8 |
| TEST EXAMPLE 23 | 15 | 2.2 | 55 | 30.0 | 7.7 | 6.9 | 0.8 | 89.2 | 73.3 | 1.11 | 0.50 | 0.62 | 0.62 | 0.50 | 3.9 |
| TEST EXAMPLE 24 | 15 | 2.2 | 55 | 15.5 | 3.6 | 3.2 | 0.3 | 90.9 | 73.9 | 1.45 | 0.50 | 0.95 | 0.95 | 0.50 | 4.3 |
| TEST EXAMPLE 25 | 15 | 3.0 | 55 | 17.0 | 2.5 | 2.3 | 0.2 | 91.4 | 80.5 | 1.61 | 0.68 | 0.93 | 0.93 | 0.68 | 6.8 |
| TEST EXAMPLE 26 | 15 | 3.0 | 55 | 11.8 | 1.3 | 1.2 | 0.1 | 92.3 | 68.9 | 1.89 | 0.68 | 1.21 | 1.21 | 0.68 | 9.1 |
| TEST EXAMPLE 27 | 15 | 3.0 | 55 | 7.8 | 0.7 | 0.6 | 0.0 | 93.6 | 56.6 | 2.18 | 0.68 | 1.50 | 1.50 | 0.68 | 11.1 |
| TEST EXAMPLE 28 | 15 | 3.0 | 55 | 5.5 | 0.4 | 0.4 | 0.0 | 95.1 | 39.0 | 2.41 | 0.68 | 1.73 | 1.73 | 0.68 | 13.8 |
| TEST EXAMPLE 29 | 15 | 3.0 | 55 | 4.1 | 0.4 | 0.4 | 0.0 | 93.3 | 25.4 | 2.39 | 0.68 | 1.71 | 1.71 | 0.68 | 10.3 |
| TEST EXAMPLE 30 | 15 | 4.0 | 55 | 10.9 | 1.2 | 0.9 | 0.2 | 82.3 | 76.8 | 1.94 | 0.90 | 1.04 | 1.04 | 0.90 | 9.1 |
| TEST EXAMPLE 31 | 15 | 4.0 | 55 | 11.6 | 1.3 | 1.1 | 0.2 | 86.9 | 87.6 | 1.90 | 0.90 | 0.99 | 0.99 | 0.90 | 8.9 |
| TEST EXAMPLE 32 | 15 | 5.0 | 55 | 6.8 | 0.6 | 0.5 | 0.1 | 82.2 | 77.8 | 2.22 | 1.13 | 1.09 | 1.09 | 1.13 | 11.3 |
| TEST EXAMPLE 33 | 15 | 5.0 | 55 | 7.6 | 0.6 | 0.5 | 0.1 | 85.3 | 80.1 | 2.20 | 1.13 | 1.07 | 1.07 | 1.13 | 12.6 |
| TEST EXAMPLE 34 | 15 | 5.0 | 55 | 8.3 | 0.6 | 0.5 | 0.1 | 87.3 | 85.8 | 2.25 | 1.13 | 1.12 | 1.12 | 1.13 | 13.8 |
| TEST EXAMPLE 35 | 15 | 5.0 | 55 | 7.4 | 0.5 | 0.5 | 0.1 | 88.5 | 83.1 | 2.28 | 1.13 | 1.16 | 1.16 | 1.13 | 14.8 |
| TEST EXAMPLE 36 | 15 | 5.0 | 55 | 6.9 | 0.5 | 0.5 | 0.1 | 88.0 | 81.7 | 2.27 | 1.13 | 1.14 | 1.14 | 1.13 | 13.7 |
| TEST EXAMPLE 37 | 15 | 5.0 | 55 | 7.0 | 0.5 | 0.4 | 0.1 | 89.1 | 80.3 | 2.31 | 1.13 | 1.18 | 1.18 | 1.13 | 13.9 |

## FIG.7

CONTRAST (y-axis)

PARALLEL LIGHT TRANSMITTANCE(%)

## FIG.8

CONTRAST (y-axis)

TOTAL LIGHT TRANSMITTANCE(%)

## FIG.9

## FIG.10

FIG.11

FIG.12

FIG.13

## FIG.14

HORIZONTAL ABSORBANCE DIFFERENCE

## FIG.15

FIG.16

PARALLEL LIGHT TRANSMITTANCE

DIFFUSE TRANSMITTANCE

CONTRAST

DIFFUSE TRANSMITTANCE

## INTERNATIONAL SEARCH REPORT

| International application No. |
|---|
| **PCT/JP2023/014699** |

**A. CLASSIFICATION OF SUBJECT MATTER**

*G02F 1/13*(2006.01)i; *G02F 1/1334*(2006.01)i; *G02F 1/1347*(2006.01)i; *G02F 1/137*(2006.01)i
FI: G02F1/13 505; G02F1/1334; G02F1/1347; G02F1/137 500

According to International Patent Classification (IPC) or to both national classification and IPC

**B. FIELDS SEARCHED**

Minimum documentation searched (classification system followed by classification symbols)

G02F1/13; G02F1/1334; G02F1/1347; G02F1/137

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/045083 A1 (DAI NIPPON PRINTING CO., LTD.) 11 March 2021 (2021-03-11) entire text, all drawings | 1-10 |
| A | JP 2020-148808 A (DAI NIPPON PRINTING CO., LTD.) 17 September 2020 (2020-09-17) entire text, all drawings | 1-10 |
| A | JP 2020-27210 A (DAI NIPPON PRINTING CO., LTD.) 20 February 2020 (2020-02-20) entire text, all drawings | 1-10 |
| A | CN 112130358 A (ZHUHAI QEELIGHT TECHNOLOGY CO., LTD.) 25 December 2020 (2020-12-25) entire text, all drawings | 1-10 |
| A | JP 2000-347223 A (NIPPON SHEET GLASS CO LTD) 15 December 2000 (2000-12-15) entire text, all drawings | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/014699**

| Patent document cited in search report | | | Publication date (day/month/year) | Patent family member(s) | | | Publication date (day/month/year) |
|---|---|---|---|---|---|---|---|
| WO | 2021/045083 | A1 | 11 March 2021 | (Family: none) | | | |
| JP | 2020-148808 | A | 17 September 2020 | (Family: none) | | | |
| JP | 2020-27210 | A | 20 February 2020 | (Family: none) | | | |
| CN | 112130358 | A | 25 December 2020 | WO | 2021/174579 | A1 | |
| JP | 2000-347223 | A | 15 December 2000 | WO | 2000/060409 | A1 | |

Form PCT/ISA/210 (patent family annex) (January 2015)

**REFERENCES CITED IN THE DESCRIPTION**

**Patent documents cited in the description**

- JP 2019194654 A